(19) Europäisches Patentamt
European Patent Office
Office européen des brevets

(11) EP 0 601 439 B1

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int Cl.[6]: **C09B 67/22**, D06P 1/02
// C09B29/42

(21) Anmeldenummer: **93119255.3**

(22) Anmeldetag: **30.11.1993**

(54) **Farbstoffmischungen, enthaltend Azofarbstoffe mit einer Kupplungskomponente aus der Diaminopyridinreihe**

Dye mixtures containing dyes with a coupling component of the diaminopyridine type

Mélanges de colorants contenant des colorants avec une composante de couplage de la série des diaminopyridines

(84) Benannte Vertragsstaaten:
**CH DE DK ES FR GB IT LI**

(30) Priorität: **07.12.1992 DE 4241116**
**02.03.1993 DE 4306391**

(43) Veröffentlichungstag der Anmeldung:
**15.06.1994 Patentblatt 1994/24**

(73) Patentinhaber: **BASF Aktiengesellschaft**
**67063 Ludwigshafen (DE)**

(72) Erfinder:
- **Loeffler, Hermann**
**D-67346 Speyer (DE)**
- **Lamm, Gunther, Dr.**
**D-67454 Hassloch (DE)**
- **Bach, Volker, Dr.**
**D-67434 Neustadt (DE)**
- **Lange, Arno, Dr.**
**D-67098 Bad Duerkheim (DE)**
- **Reichelt, Helmut, Dr.**
**D-67435 Neustadt (DE)**
- **Rothmaier, Herbert**
**D-67482 Altdorf (DE)**

(56) Entgegenhaltungen:
**EP-A- 0 214 445**
**EP-A- 0 244 740**
**EP-A- 0 433 693**
**EP-A- 0 450 434**
**EP-A- 0 548 715**
**FR-A- 2 118 075**
**FR-A- 2 187 857**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 601 439 B1

## Beschreibung

Die vorliegende Erfindung betrifft neue Farbstoffmischungen, enthaltend mindestens 6 gleichfarbige Farbstoffe der Formel I

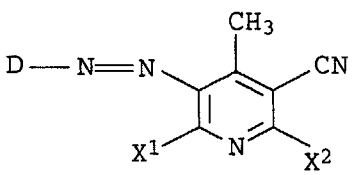

(I),

in der

D für den Rest einer Diazokomponente aus der Anilin-, Aminothiophen-, Aminothiazol-, Aminoisothiazol- oder Aminobenzisothiazolreihe und

einer der Reste $X^1$ und $X^2$ für Amino und der andere für einen Rest der Formel

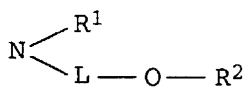

stehen, worin

L $C_2$-$C_8$-Alkylen, das gegebenenfalls durch 1 oder 2 Sauerstoffatome in Etherfunktion unterbrochen ist,

$R^1$ Wasserstoff oder $C_1$-$C_4$-Alkyl, das gegenenfalls durch Hydroxy, $C_1$-$C_4$-Alkoxy oder $C_1$-$C_8$-Alkanoyloxy substituiert ist, und

$R^2$ Wasserstoff, $C_1$-$C_4$-Alkyl, Benzyl, Phenyl oder $C_1$-$C_8$-Alkanoyl

bedeuten, wobei die Farbstoffe der Formel I mindestens zwei verschiedene Reste

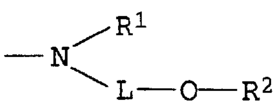

aufweisen und für mindestens einen der verschiedenen Reste gilt, daß $R^2$ Wasserstoff oder $C_1$-$C_8$-Alkanoyl bedeutet, deren Verwendung zum Färben oder Bedrucken von textilen Materialien, Farbstoffmischungen, enthaltend Thienylazopyridinfarbstoffe und Anthrachinonfarbstoffe sowie deren Verwendung zum Färben oder Bedrucken von textilen Materialien.

Aus der US-A-4 855 412, US-A-4 855 413 oder EP-A-201 896 sind bereits die Einzelfarbstoffe der obengenannten Farbstoffmischungen oder auch Mischungen, die bis zu 4 Einzelkomponenten aufweisen, bekannt.

Es hat sich jedoch gezeigt, daß die Farbstoffe des Standes der Technik noch Mängel in ihren anwendungstechnischen Eigenschaften aufweisen. Dabei sind insbesondere eine starke Temperaturabhängigkeit des Aufziehverhaltens der Farbstoffe, die Neigung des dispergierten Farbstoffs oder Farbstoffgemisches zur Rekristallisation sowie eine ungenügende Baderschöpfung zu nennen.

Aufgabe der vorliegenden Erfindung war es nun, neue Farbstoffgemische bereitzustellen, die frei von den obengenannten Mängeln sind.

Demgemäß wurden die eingangs weiter bezeichneten Farbstoffmischungen gefunden.

Alle in den Farbstoffkomponenten der erfindungsgemäßen Farbstoffmischungen auftretenden Alkyl- und Alkylengruppen können sowohl geradkettig als auch verzweigt sein.

Wenn in den Farbstoffkomponenten substituierte Alkylgruppen auftreten, so weisen diese in der Regel 1 oder

2 Substituenten auf.

Wenn in den Farbstoffkomponenten substituierte Phenylgruppen auftreten, so weisen diese in der Regel 1 bis 3, vorzugsweise 1 oder 2, Substituenten auf.

Bevorzugt sind erfindungsgemäße Farbstoffmischungen, wobei

D für einen Rest der Formel

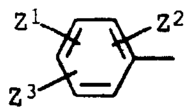
,
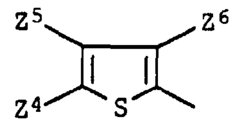
,

(IIa) (IIb)

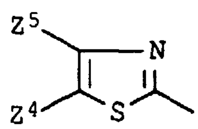
,
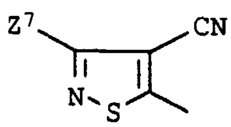
oder
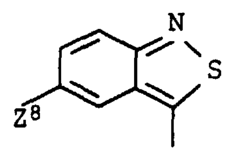

(IIc) (IId) (IIe)

steht, worin

$Z^1$ Wasserstoff, Nitro, Cyano, $C_1$-$C_9$-Alkoxycarbonyl, das durch 1 oder 2 Sauerstoffatome in Etherfunktion unterbrochen sein kann, $C_1$-$C_9$-Alkylaminocarbonyl, das durch 1 oder 2 Sauerstoffatome in Etherfunktion unterbrochen sein kann, Trifluormethyl, $C_1$-$C_4$-Alkylsulfonyl, 3-($C_1$-$C_4$-Alkyl)-1,2,4-oxadiazol-5-yl oder 3-Phenyl-1,2,4-oxadiazol-5-yl,

$Z^2$ Wasserstoff, Chlor, Brom, Cyano, Methyl, Methoxy, Ethoxy, Phenylazo oder Benzoyl, das gegebenenfalls durch Methyl, Methoxy oder Chlor substituiert ist,

$Z^3$ Wasserstoff, Cyano, Chlor, Brom oder $C_1$-$C_9$-Alkoxycarbonyl, das durch 1 oder 2 Sauerstoffatome in Etherfunktion unterbrochen sein kann, oder $Z^2$ und $Z^3$ zusammen einen Rest der Formel CO-N$A^1$-CO, worin $A^1$ die Bedeutung von Wasserstoff oder $C_1$-$C_4$-Alkyl besitzt,

$Z^4$ Cyano, Formyl, Nitro, $C_1$-$C_9$-Alkoxycarbonyl, das durch 1 oder 2 Sauerstoffatome in Etherfunktion unterbrochen sein kann, gegebenenfalls durch Cyano substituiertes Phenylazo oder einen Rest der Formel

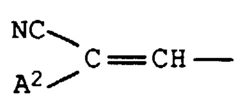
,

worin $A^2$ die Bedeutung von Cyano oder $C_1$-$C_9$-Alkoxycarbonyl, das durch 1 oder 2 Sauerstoffatome in Etherfunktion unterbrochen sein kann, besitzt,

$Z^5$ Wasserstoff, $C_1$-$C_4$-Alkyl, $C_1$-$C_4$-Alkoxy, Phenyl, das gegebenenfalls durch Methyl, Methoxy oder Chlor substituiert ist, Benzyl, das gegebenenfalls durch Methyl, Methoxy oder Chlor substituiert ist, $C_1$-$C_4$-Alkylsulfonyl, Chlor, Brom oder $C_1$-$C_9$-Alkoxycarbonyl, das durch 1 oder 2 Sauerstoffatome in Etherfunktion unterbrochen sein kann,

$Z^6$ $C_1$-$C_4$-Alkyl, Phenyl, das gegebenenfalls durch Methyl, Methoxy oder Chlor substituiert ist, Benzyl, das gegebenenfalls durch Methyl, Methoxy oder Chlor substituiert ist, Cyano, Nitro, $C_1$-$C_9$-Alkoxycarbonyl,

das durch 1 oder 2 Sauerstoffatome in Etherfunktion unterbrochen sein kann, oder $C_1$-$C_4$-Alkylsulfonyl,

$Z^7$ $C_1$-$C_4$-Alkyl, Phenyl, das gegebenenfalls durch Methyl, Methoxy oder Chlor substituiert ist, Benzyl, das gegebenenfalls durch Methyl, Methoxy oder Chlor substituiert ist, oder $C_1$-$C_4$-Alkylsulfonyl, und

$Z^8$ Nitro, Cyano oder $C_1$-$C_4$-Alkylsulfonyl bedeuten.

Wenn D einen Rest der Formel IIa bedeutet, sind solche Farbstoffe bevorzugt, in denen mindestens einer der Reste $Z^1$, $Z^2$ und $Z^3$ von Wasserstoff verschieden ist.

Reste $R^1$, $R^2$, $Z^5$, $Z^6$, $Z^7$ und $A^1$ sind z.B. Methyl, Ethyl, Propyl, Isopropyl, Butyl, Isobutyl oder sec-Butyl.

Reste $Z^5$, $Z^6$ und $Z^8$ sind, wie auch Reste $Z^1$, weiterhin z.B. Methylsulfonyl, Ethylsulfonyl, Propylsulfonyl, Isopropylsulfonyl, Butylsulfonyl, Isobutylsulfonyl oder sec-Butylsulfonyl.

Reste $Z^1$, $Z^5$ und $Z^6$ sind, wie auch Reste $Z^3$, $Z^4$ und $A^2$, weiterhin z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, tert-Pentyloxycarbonyl, Hexyloxycarbonyl, 2-Methylpentyloxycarbonyl, Heptyloxycarbonyl, 2-Methylhexyloxycarbonyl, Octyloxycarbonyl, Isooctyloxycarbonyl, 2-Ethylhexyloxycarbonyl, Nonyloxycarbonyl oder Isononyloxycarbonyl.

Reste $Z^1$ sind weiterhin z.B. Methylaminocarbonyl, Ethylaminocarbonyl, Propylaminocarbonyl, Isopropylaminocarbonyl, Butylaminocarbonyl, Isobutylaminocarbonyl, sec-Butylaminocarbonyl, Pentylaminocarbonyl, Isopentylaminocarbonyl, Neopentylaminocarbonyl, tert-Pentylaminocarbonyl, Hexylaminocarbonyl, 2-Methylpentylaminocarbonyl, Heptylaminocarbonyl, 2-Methylhexylaminocarbonyl, Octylaminocarbonyl, Isooctylaminocarbonyl, 2-Ethylhexylaminocarbonyl, Nonylaminocarbonyl oder Isononylaminocarbonyl.

Reste $R^2$ sind weiterhin z.B. Formyl, Acetyl, Propionyl, Butyryl, Isobutyryl, Pentanoyl, Isopentanoyl, Hexanoyl, Heptanoyl, Octanoyl oder 2-Ethylhexanoyl.

Reste $R^1$ sind weiterhin z.B. 2-Hydroxyethyl, 2- oder 3-Hydroxypropyl, 2- oder 4-Hydroxybutyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2-oder 3-Isopropoxypropyl, 2- oder 3-Butoxypropyl, 2- oder 4-Methoxybutyl, 2- oder 4-Ethoxybutyl, 2- oder 4-Propoxybutyl, 2- oder 4-Isopropoxybutyl, 2- oder 4-Butoxybutyl, 2-Formyloxyethyl, 2-Acetyloxyethyl, 2-Propionyloxyethyl, 2-Butyryloxyethyl, 2-Isobutyryloxyethyl, 2-Pentanoyloxyethyl, 2-Isopentanoyloxyethyl, 2-Hexanoyloxyethyl, 2-Heptanoyloxyethyl, 2-Octanoyloxyethyl, 2-(2-Ethylhexanoyloxy)ethyl, 2- oder 3-Formyloxypropyl, 2- oder 3-Acetyloxypropyl, 2- oder 3-Propionyloxypropyl, 2- oder 3-Butyryloxypropyl, 2- oder 3-Isobutyryloxypropyl, 2- oder 3-Pentanoyloxypropyl, 2- oder 3-Isopentanoyloxypropyl, 2- oder 3-Hexanoyloxypropyl, 2- oder 3-Heptanoyloxypropyl, 2- oder 3-Octanoyloxypropyl, 2- oder 3-(Ethylhexanoyloxy)propyl, 2- oder 4-Formyloxybutyl, 2- oder 4-Acetyloxybutyl, 2- oder 4-Propionyloxybutyl, 2- oder 4-Butyryloxybutyl, 2- oder 4-Isobutyryloxybutyl, 2- oder 4-Pentanoyloxybutyl, 2- oder 4-Hexanoyloxybutyl, 2- oder 4-Heptanoyloxybutyl, 2- oder 4-Octanoyloxybutyl oder 2- oder 4-(2-Ethylhexanoyloxy)butyl.

Reste $Z^5$ sind weiterhin z.B. Methoxy, Ethoxy, Propoxy, Isopropoxy, Butoxy, Isobutoxy oder sec-Butoxy.

Reste $Z^5$, $Z^6$ und $Z^7$ sind weiterhin z.B. Phenyl, 2-, 3- oder 4-Methylphenyl, 2,4-Dimethylphenyl, 2-, 3- oder 4-Methoxyphenyl, 2,4-Dimethoxyphenyl, 2-, 3- oder 4-Chlorphenyl, 2,4-Dichlorphenyl, 2-Methyl-4-chlorphenyl, 2-Methyl-4-methoxyphenyl, Benzyl, 2-, 3- oder 4-Methylbenzyl, 2-, 3- oder 4-Methoxybenzyl oder 2-, 3- oder 4-Chlorbenzyl.

Reste L sind z.B. $CH_2$, $(CH_2)_2$, $(CH_2)_3$, $(CH_2)_4$, $(CH_2)_5$, $(CH_2)_6$, $(CH_2)_7$, $(CH_2)_8$, $CH(CH_3)CH_2$, $CH(CH_3)CH(CH)_3$, $(CH_2)_2O(CH_2)_2$, $(CH_2)_2O(CH_2)_3$, $(CH_2)_3O(CH_2)_3$, $(CH_2)_3O(CH_2)_4$, $(CH_2)_3O(CH_2)_4$, $CH(CH_3)CH_2OCH_2CH(CH_3)$ oder $(CH_2)_2O(CH_2)_2O(CH_2)_2$.

Reste $Z^2$ sind z.B. Benzoyl, 2-, 3- oder 4-Methylbenzoyl, 2-, 3-oder 4-Methoxybenzoyl oder 2-, 3- oder 4-Chlorbenzoyl.

Bevorzugt sind weiterhin erfindungsgemäße Farbstoffmischungen, enthaltend 6 bis 12, insbesondere 6 bis 8 oder 10 bis 12 gleichfarbige Farbstoffe der Formel I, wobei erfindungsgemäße Farbstoffmischungen, enthaltend 8 gleichfarbige Farbstoffe der Formel I besonders hervorzuheben sind.

Besonders bevorzugt sind erfindungsgemäße Farbstoffmischungen, wobei D für einen Rest der Formel IIb, IIc oder IId steht, wobei ein Rest der Formel IIb besonders hervorzuheben ist.

Besonders bevorzugt sind weiterhin erfindungsgemäße Farbstoffmischungen, wobei $R^2$ $C_1$-$C_5$-Alkanoyl und L $C_4$-$C_8$-Alkylen, das durch 1 oder 2 Sauerstoffatome in Etherfunktion unterbrochen ist, bedeuten.

Ganz besonders bevorzugt sind erfindungsgemäße Farbstoffmischungen, wobei L einen Rest der Formel $(CH_2)_2O(CH_2)_2$, $(CH_2)_2O(CH_2)_3$, $(CH_2)_3O(CH_2)_3$, $(CH_2)_3O(CH_2)_4$ oder $(CH_2)_2O(CH_2)_2O(CH_2)_2$ bedeutet.

Ganz besonders bevorzugt sind weiterhin erfindungsgemäße Farbstoffmischungen, wobei $R^2$ Acetyl bedeutet.

Ganz besonders bevorzugt sind weiterhin erfindungsgemäße Farbstoffmischungen, wobei D für einen Rest der Formel III

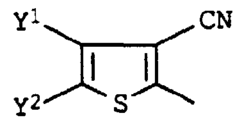

(III)

steht, worin

$Y^1$ Methyl oder Chlor und

$Y^2$ Cyano oder Formyl bedeuten.

Die neuen Farbstoffmischungen können z.B. nach der im folgenden beschriebenen Methode erhalten werden.

Beispielsweise kann man auf an sich bekanntem Weg 2,6-Dichlor-3-cyano-4-methylpyridin mit Ammoniak in die entsprechenden Aminochlorpyridine der Formeln IVa und IVb überführen

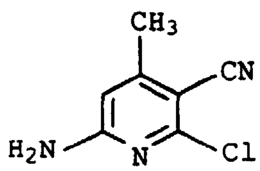

(IVa)

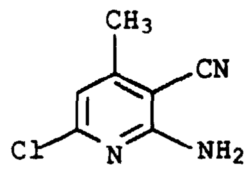

(IVb) ,

wobei die Isomeren IVa und IVb im Molverhältnis 3:17 bis 2:3 entstehen.

In einer Folgereaktion können die Aminochlorpyridine IVa/IVb mit einem Gemisch aus mindestens zwei Aminen der Formel V

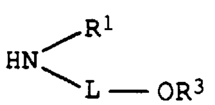

(V) ,

in der L und $R^1$ jeweils die obengenannte Bedeutung besitzen und $R^3$ Wasserstoff, $C_1$-$C_4$-Alkyl, Benzyl oder Phenyl bedeutet, zur Reaktion gebracht werden. Die Amine der Formel V müssen sich dabei in mindestens einer der Variablen L, $R^1$ und $R^3$ unterscheiden und außerdem muß in mindestens einem Amin der Formel V $R^3$ Wasserstoff bedeuten.

Bei dieser Reaktion entstehen die Diaminopyridingemische der Formel VIa und VIb

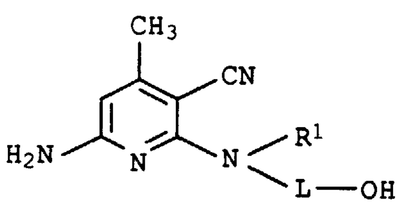

(VIa)

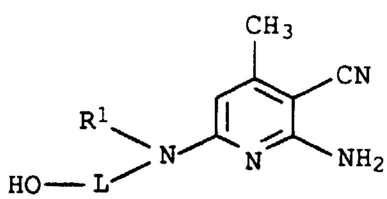

(VIb)

worin L und $R^1$ jeweils die obengenannte Bedeutung besitzen, im entsprechenden Molverhältnis.

Daran anschließend kann das resultierende Diaminopyridingemisch

a) zuerst acyliert, was z.B. durch Umsetzung mit einer Carbonsäure der Formel VII

$R^4$-OH (VII),

in der $R^4$ $C_1$-$C_8$-Alkanoyl bedeutet, gegebenenfalls in Gegenwart von Mineralsäure erfolgen kann, und

b) dann mit einem Diazoniumsalz, das sich von einem Amin der Formel VIII

D-$NH_2$ (VIII),

in der D die obengenannte Bedeutung besitzt, ableitet, gekuppelt werden.

Steht $R^1$ in Formel VIa/VIb für durch Hydroxy substituiertes $C_1$-$C_4$-Alkyl, so erfolgt im Schritt a) eine doppelte Acylierung.

Man kann jedoch auch zunächst die Kupplung des Diaminopyridingemischs mit dem Diazoniumsalz vornehmen und anschließend die Acylierungsreaktion durchführen. Diese zuletzt genannte Verfahrensvariante ist bevorzugt.

Bei dieser Methode erhält man bei der Ausfällung der Farbstoffmischung aus der Carbonsäure das Gemisch in hoher Reinheit und in optimaler Kristallform und Kristallgröße. Dies minimiert den vor der Anwendung notwendigen Aufwand der Dispergierung der Farbstoffmischungen und verhindert ihr Kristallwachstum in der Farbflotte.

In vielen Fällen fallen die erfindungsgemäßen Farbstoffmischunger in einem Gemisch zweier verschiedener Kristallmodifikationen an.

Die neuen Farbstoffmischungen eignen sich in vorteilhafter Weise zum Färben oder Bedrucken von textilen Materialien. Dies sind z.B. Fasern oder Gewebe, insbesondere aus Polyestern, daneben auch aus Celluloseestern oder Polyamiden, oder Mischgewebe aus Polyestern und Cellulosefasern oder Wolle.

Die erfindungsgemäßen Farbstoffmischungen zeigen praktisch keine Temperaturabhängigkeit des Aufziehverhaltens der Farbstoffe. Außerdem weisen sie eine hohe Baderschöpfung auf und ihre Neigung zur Rekristallisation in dispergierter Form ist sehr gering.

Die vorliegende Erfindung betrifft weiterhin neue Farbstoffmischungen, enthaltend einen oder mehrere rote Azofarbstoffe der Formel IX

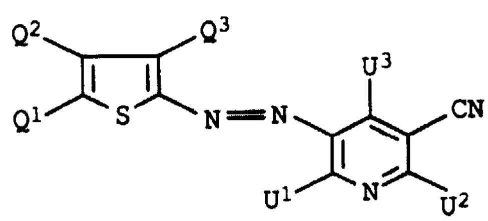

(IX),

in der
einer der Reste $U^1$ und $U^2$ für einen Rest der Formel

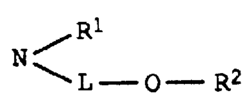

und der andere für einen Rest der Formel NH-B, worin

L $C_2$-$C_8$-Alkylen, das gegebenenfalls durch 1 oder 2 Sauerstoffatome in Etherfunktion unterbrochen ist,

$R^1$ Wasserstoff oder $C_1$-$C_4$-Alkyl, das gegenenfalls durch Hydroxy, $C_1$-$C_4$-Alkoxy oder $C_1$-$C_8$-Alkanoyloxy substituiert ist,

$R^2$ Wasserstoff, $C_1$-$C_4$-Alkyl, Benzyl, Phenyl oder $C_1$-$C_8$-Alkanoyl und

B Wasserstoff, $C_1$-$C_4$-Alkyl, das gegebenenfalls durch Hydroxy substituiert ist, oder einen Rest der Formel L-O-$R^2$,

wobei L und $R^2$ jeweils die obengenannte Bedeutung besitzen,

bedeuten,

$U^3$ für Wasserstoff oder $C_1$-$C_4$-Alkyl,

$Q^1$ für Cyano, Formyl, Nitro, oder $C_1$-$C_9$-Alkoxycarbonyl, das durch 1 oder 2 Sauerstoffatome in Etherfunktion unterbrochen sein kann,

$Q^2$ Wasserstoff, $C_1$-$C_4$-Alkyl, $C_1$-$C_4$-Alkoxy, Phenyl, das gegebenenfalls durch Methyl, Methoxy oder Chlor substituiert ist, Benzyl, das gegebenenfalls durch Methyl, Methoxy oder Chlor substituiert ist, $C_1$-$C_4$-Alkylsulfonyl, Chlor, Brom oder $C_1$-$C_9$-Alkoxycarbonyl, das durch 1 oder 2 Sauerstoffatome in Etherfunktion unterbrochen sein kann, und

$Q^3$ für Cyano, Nitro, $C_1$-$C_9$-Alkoxycarbonyl, das durch 1 oder 2 Sauerstoffatome in Etherfunktion unterbrochen sein kann, oder $C_1$-$C_4$-Alkylsulfonyl stehen,

einen oder mehrere gelbe Farbstoff der Formel X und/oder XI

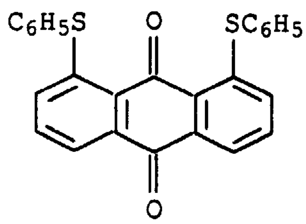

(X),

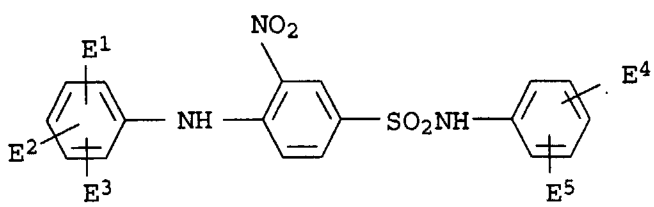

(XI),

worin

$E^1$, $E^2$, $E^3$, $E^4$ und $E^5$ unabhängig voneinander jeweils für Wasserstoff, $C_1$-$C_4$-Alkyl, $C_1$-$C_4$-Alkoxy, Halogen oder Phenoxy stehen,

und/oder einen oder mehrere blaue Anthrachinonfarbstoffe der Formel XII

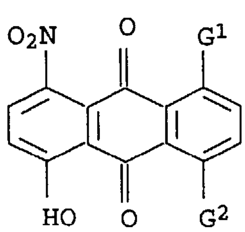

(XII),

,

in der
einer der beiden Reste $G^1$ und $G^2$ für Hydroxy und der andere für Phenylamino, das gegebenenfalls durch Hydroxy, $C_1$-$C_4$-Alkyl oder $C_1$-$C_4$-Alkoxy substituiert ist, steht, Farbstoffzubereitungen, enthaltend diese Farbstoffmischungen,

sowie deren Verwendung zum Färben oder Bedrucken von textilen Materialien.

An Textilfarbstoffe, die im Automobilbereich zur Anwendung kommen, z.B. zur Einfärbung von Sitzpolsterbezügen, werden hohe anwendungstechnische Anforderungen gestellt, da solche Farbstoffe gleichzeitig starker Lichteinwirkung und starker thermischer Belastung ausgesetzt sind. Als wichtigster Parameter ist dabei eine gute Heißlichtechtheit zu nennen. Dies trifft besonders auch für Farbstoffmischungen zu, insbesondere für solche zum Trichromiefärben.

Eine weitere Aufgabe der vorliegenden Erfindung war es nun, neue Farbstoffmischungen bereitzustellen, die sich vorteilhaft zur Anwendung im Automobilbereich eignen. Die neuen Mischungen sollten insbesondere eine gute Heißlichtechtheit sowie hohe Farbstärke aufweisen.

Demgemäß wurden die zweitgenannten, oben näher bezeichneten Farbstoffmischungen gefunden.

Reste B, $U^3$, $E^1$, $E^2$, $E^3$, $E^4$, $E^5$ und $Q^2$ sind z.B. Methyl, Ethyl, Propyl, Isopropyl, Butyl, Isobutyl oder sec-Butyl.

Reste $Q^3$ sind, wie weiterhin auch Reste $Q^2$, z.B. Methylsulfonyl, Ethylsulfonyl, Propylsulfonyl, Isopropylsulfonyl, Butylsulfonyl, Isobutylsulfonyl oder sec-Butylsulfonyl.

Reste $Q^2$ sind weiterhin z. B. Phenyl, 2-, 3- oder 4-Methylphenyl, 2,4-Dimethylphenyl, 2-, 3- oder 4-Methoxyphenyl, 2,4-Dimethoxyphenyl, 2-, 3- oder 4-Chlorphenyl, 2,4-Dichlorphenyl, 2-Methyl-4-chlorphenyl, 2-Methyl-4-methoxyphenyl, Benzyl, 2-, 3- oder 4-Methylbenzyl, 2-, 3- oder 4-Methoxybenzyl oder 2-, 3- oder 4-Chlorbenzyl.

Reste $Q^1$ sind, wie weiterhin auch Reste $Q^2$ und $Q^3$, z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl, tert-Pentyloxycarbonyl, Hexyloxycarbonyl, 2-Methylpentyloxycarbonyl, Heptyloxycarbonyl, 2-Methylhexyloxycarbonyl, Octyloxycarbonyl, Isooctyloxycarbonyl, 2-Ethylhexyloxycarbonyl, Nonyloxycarbonyl oder Isononyloxycarbonyl.

Reste $E^1$, $E^2$, $E^3$, $E^4$, $E^5$ und $Q^2$ sind weiterhin z.B. Methoxy, Ethoxy, Propoxy, Isopropoxy, Butoxy, Isobutoxy oder sec-Butoxy.

Reste $E^1$, $E^2$, $E^3$, $E^4$ und $E^5$ sind weiterhin z. B. Fluor, Chlor oder Brom.

Reste $G^1$ oder $G^2$ sind z. B. Phenylamino, 4-Hydroxyphenylamino, 4-Methylphenylamino oder 4-Methoxyphenylamino.

Bezüglich der beispielhaften Aufzählung der Reste $R^1$, $R^2$ und L wird auf die voranstehenden Ausführungen verwiesen.

Bevorzugt sind Farbstoffmischungen, enthaltend einen Azofarbstoff der Formel IX, in der einer der Reste $U^1$ und $U^2$ für Amino und der andere für einen Rest der Formel

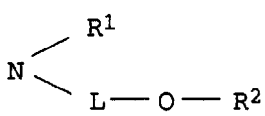

steht, worin L, $R^1$ und $R^2$ jeweils die obengenannte Bedeutung besitzen.

Bevorzugt sind weiterhin Farbstoffmischungen, enthaltend einen Azofarbstoff der Formel IX, in der $Q^1$ für Cyano oder Formyl, $Q^2$ für $C_1$-$C_4$-Alkyl oder Chlor und $Q^3$ für Cyano stehen.

Bevorzugt sind weiterhin Farbstoffmischungen, enthaltend einen Azofarbstoff der Formel IX, in der $U^3$ für Methyl steht.

Bevorzugt sind weiterhin Farbstoffmischungen, enthaltend einen Azofarbstoff der Formel IX, in der $R^2$ $C_1$-$C_5$-Alkanoyl und L $C_4$-$C_8$-Alkylen, das durch 1 oder 2 Sauerstoffatome in Etherfunktion unterbrochen ist, bedeuten.

Besonders bevorzugt sind Farbstoffmischungen, enthaltend einen Azofarbstoff der Formel IX, in der L einen Rest der Formel $(CH_2)_2O(CH_2)_2$, $(CH_2)_2O(CH_2)_3$, $(CH_2)_3O(CH_2)_3$, $(CH_2)_3O(CH_2)_4$ oder $(CH_2)_2O(CH_2)_2O(CH_2)_2$ bedeutet.

Besonders bevorzugt sind weiterhin Farbstoffmischungen, enthaltend einen Azofarbstoff der Formel IX, in der $R^2$ Acetyl bedeutet.

Besonders bevorzugt sind weiterhin Farbstoffmischungen, enthaltend einen Azofarbstoff der Formel IX, in der $Q^1$ und $Q^3$ jeweils für Cyano und $Q^3$ für $C_1$-$C_4$-Alkyl, insbesondere Methyl stehen.

Hervorzuheben sind weiterhin Farbstoffmischungen, enthaltend mindestens 6 Azofarbstoffe der Formel IX.

Besonders hervorzuheben sind Farbstoffmischungen, enthaltend 6 bis 12, insbesondere 6 bis 8 oder 10 bis 12 Azofarbstoffe der Formel IX, wobei Farbstoffmischungen, enthaltend 8 Azofarbstoffe der Formel IX, besonders zu nennen sind.

Wenn die erfindungsgemäßen Farbstoffmischungen einen Farbstoff der Formel XI enthalten, so sind solche Mischungen bevorzugt, die einen Farbstoff der Formel XIa

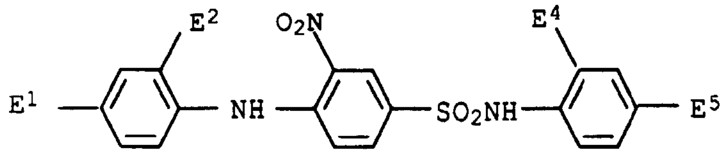

(XIa)

aufweisen, worin
$E^1$, $E^2$, $E^4$ und $E^5$ entweder jeweils Wasserstoff oder jeweils Methyl bedeuten.

Das Gewichtsverhältnis der Farbstoffe IX, X, XI und/oder XII untereinander kann über weite Bereiche hinweg variieren und ist insbesondere abhängig vom einzustellenden Farbton. So können in den erfindungsgemäßen Mischungen die Farbstoffe beispielsweise in folgendem Gewichtsverhältnis vorliegen.

Mischungen, enthaltend die Farbstoffe IX und X:
2,0:98,0 bis 99,8:0,2.

Mischungen, enthaltend die Farbstoffe IX und XI:
1,3:98,7 bis 99,8:0,2.

Mischung, enthaltend die Farbstoffe IX und XII:
1,8:98,2 bis 98,1:1,9.

Mischung, enthaltend die Farbstoffe IX, XII und X:
97,8:2,0:0,2 bis 0,9:51,7:47,4
80,6:1,6:17,8 bis 1,8:97,4:0,8
80,5:19,4:0,1 bis 1,9:8,1:90,0

Mischungen, enthaltend die Farbstoffe IX, XII und XI:
97,8:2,0:0,2 bis 0,7:41,7:57,6
74,0:1,4:24,6 bis 1,8:97,1:1,1
97,9:1,9:0,2 bis 1,3:5,6:93,1

Bei den Farbstoffen der Formel IX, X, XI und XII handelt es sich um an sich bekannte Produkte.

Farbstoffe der Formel IX sind beispielsweise aus der US-A-4 855 412, US-A-4 855 413 oder EP-A-201 896 bekannt.

Der Farbstoff der Formel X ist unter dem Namen C.I. Solvent Yellow 163 (58 840) bekannt.

Farbstoffe der Formel XI sind z. B. in der JP-A-281 666/1991 beschrieben. Der unsubstituierte Farbstoff ($E^1$ bis $E^5$ = H) ist unter dem Namen Disperse Yellow 42 (C.I. 10 338) bekannt.

Der Farbstoff der Formel XII ($G^1$=Phenylamino, $G^2$=Hydroxy) ist unter dem Namen C.I. Disperse Blue 77 (60 766) bekannt.

Die erfindungsgemäßen Farbstoffmischungen können weiterhin bis zu 30 Gew.-%, vorzugsweise bis zu 20 Gew.-%, jeweils bezogen auf das Gesamtgewicht der Farbstoffe IX, X, XI und/oder XII, eines oder mehrerer Nuancierfarbstoffe aufweisen.

Geeignete gelbe bis orange Nuancierfarbstoffe sind z.B. die folgenden an sich bekannten und zumeist handelsüblichen Farbstoffe:

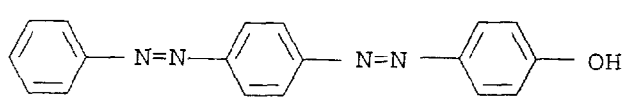

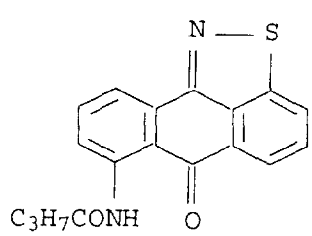

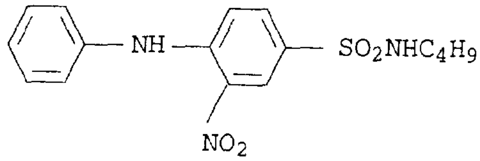

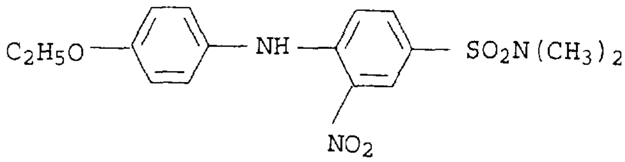

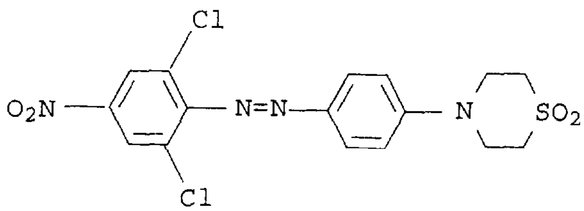

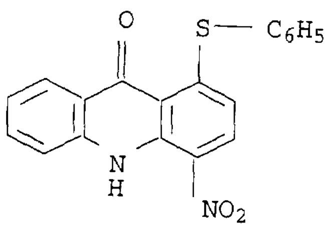

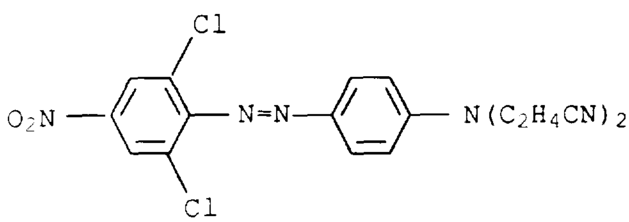

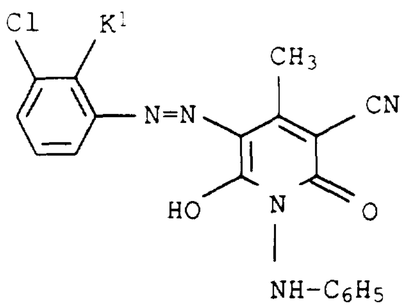

($K^1$=H,Cl 1:1)

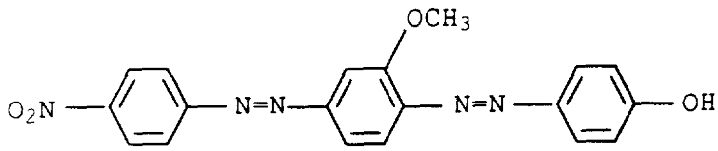

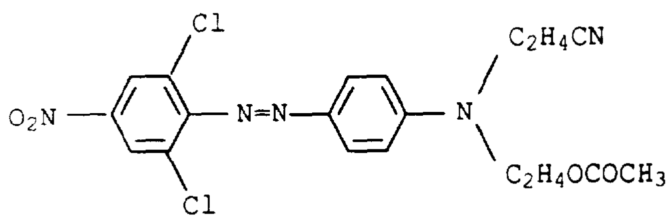

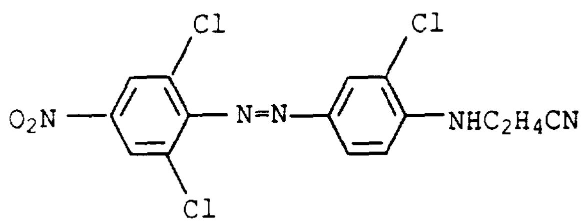

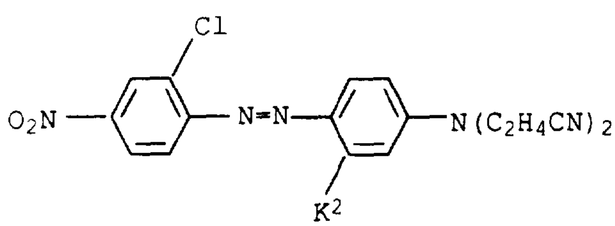

($K^2$=H, $CH_3$)

Geeignete rote Nuancierfarbstoffe sind z.B. die folgenden an sich bekannten und zumeist handelsüblichen Farbstoffe:

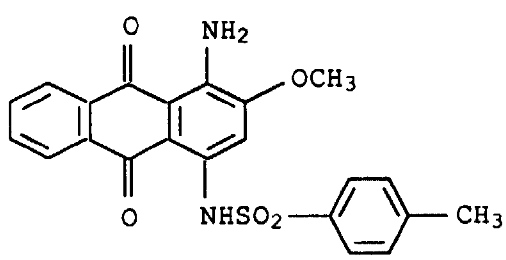

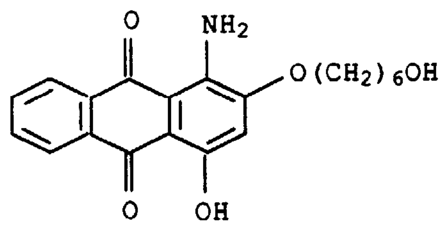

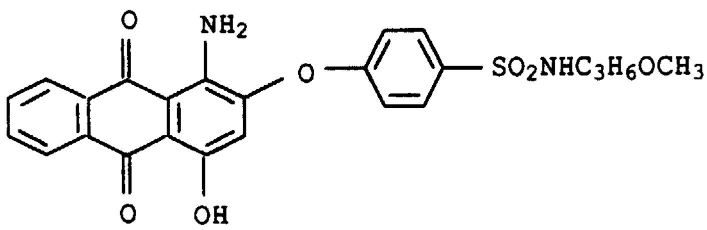

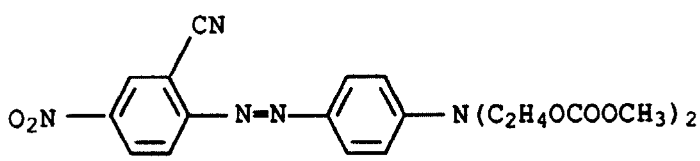

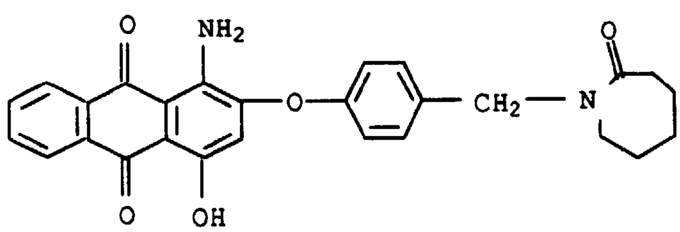

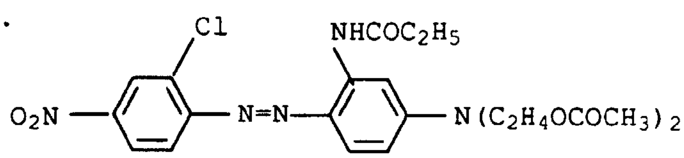

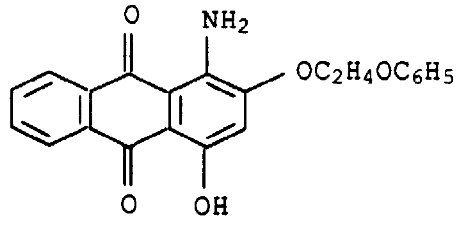

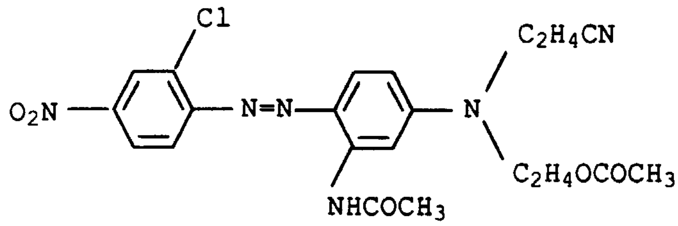

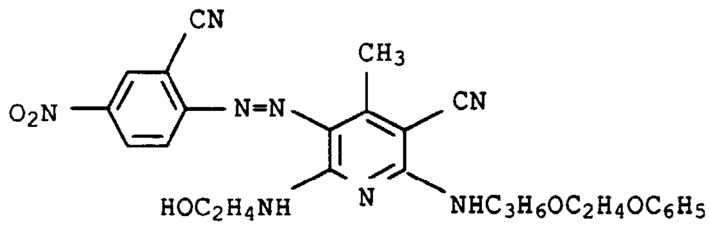

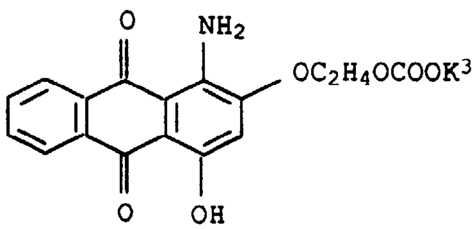

$(K^3=C_2H_5,\ C_6H_5)$

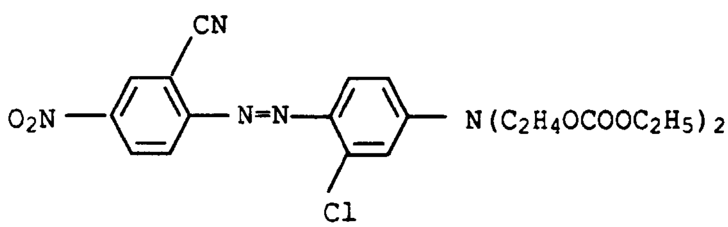

Geeignete blaue bis violette Nuancierfarbstoffe sind z.B. die folgenden an sich bekannten und zumeist handelsüblichen Farbstoffe:

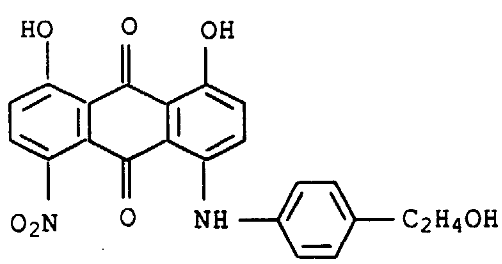

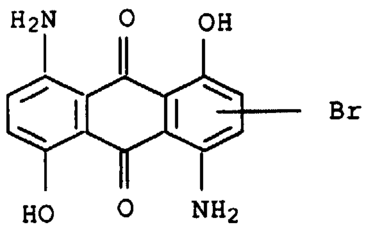

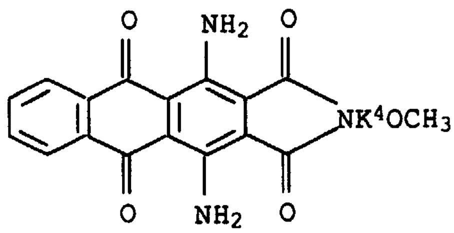

($K^4$=$C_3H_6OC_2H_4$, $C_3H_6$)

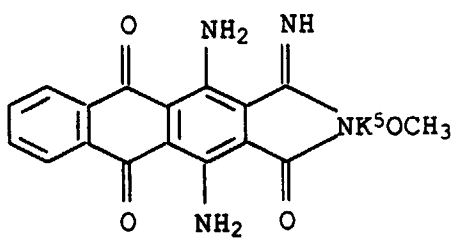

($K^5$=$C_3H_6OC_2H_4$, $C_3H_6$)

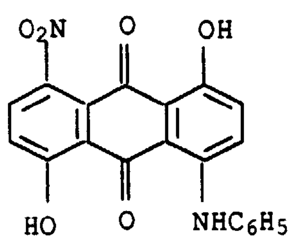

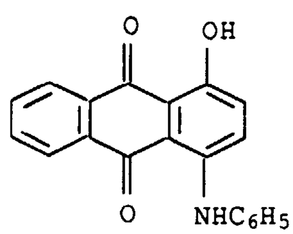

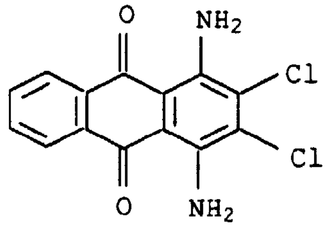

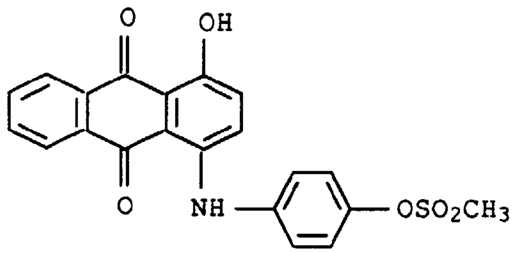

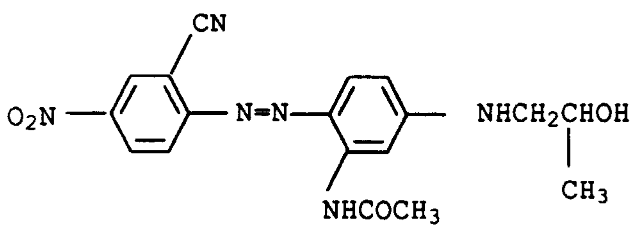

Als weitere Bestandteile können die zweitgenannten erfindungsgemäßen Farbstoffmischungen UV-Absorber aufweisen. Geeignete UV-Absorber sind z.B. solche der Formel XIII oder XIV

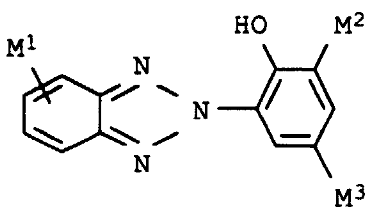

(XIII),

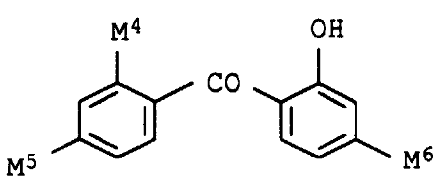

(XIV),

worin

$M^1$ Wasserstoff oder Chlor,

$M^2$ und $M^3$ gleich oder verschieden sind und unabhängig voneinander jeweils Wasserstoff oder $C_1$-$C_8$-Alkyl, das gegebenenfalls durch Phenyl substituiert ist,

M4 Wasserstoff oder Hydroxy und

$M^5$ und $M^6$ gleich oder verschieden sind und unabhängig voneinander jeweils Wasserstoff, Hydroxy oder $C_1$-$C_6$-Alkoxy, das gegebenenfalls durch Hydroxy, $C_1$-$C_4$-Alkoxy, $C_1$-$C_4$-Alkanoyloxy oder Benzoyloxy substituiert ist, bedeuten.

Besonders zu nennen sind dabei UV-Absorber der Formel XIIIa, XIIIb, XIVa, XIVb oder XIVc

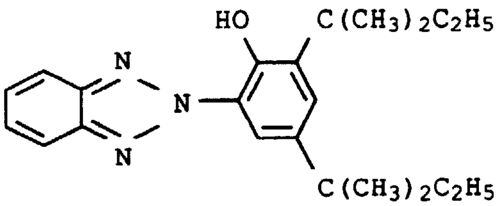

(XIIIa),

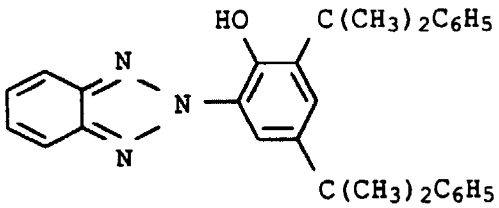

(XIIIb),

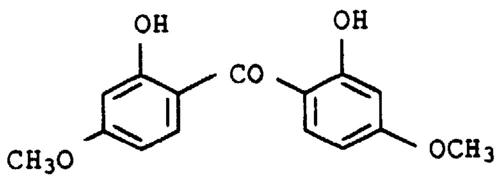

(XIVa),

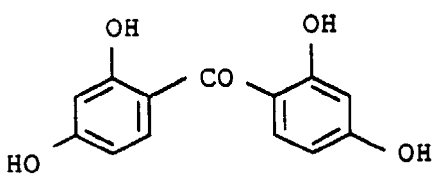

(XIVb),

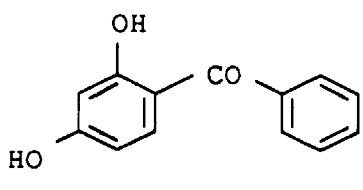

(XIVc).

Die UV-Absorber können dabei einzeln oder auch in Mischung untereinander zur Anwendung gelangen. Dabei sind jeweils Mischungen verschiedener Spezies der Formel XIII oder XIV oder auch Mischungen von Verbindungen der Formel XIII und XIV geeignet.

Im allgemeinen verwendet man dabei 0 bis 6 Gew.-%, vorzugsweise 2 bis 4 Gew.-%, jeweils bezogen auf das Gewicht des zu färbenden Textilguts, an UV-Absorbern.

Die Herstellung der zweitgenannten erfindungsgemäßen Farbstoffmischungen erfolgt auf an sich bekanntem

Weg, z.B. durch Mischen der jeweiligen Partner im genannten Gewichtsverhältnis. Gegebenenfalls können den neuen Mischungen weitere Komponenten, z.B. Dispergiermittel, wie Ligninsulfonate oder Sulfonierungsprodukte des Reaktionsprodukts von Formaldehyd mit Aromaten, oder andere Hilfsstoffe, zugesetzt werden. Es ist auch möglich, bereits fertige Farbstoffpräparationen der jeweiligen Partner oder fertige Farbstoffpräparationen mit reinen Farbstoffen abzumischen.

Farbstoffzubereitungen, die die zweitgenannten neuen Farbstoffmischungen aufweisen, enthalten in der Regel 10 bis 60 Gew.-%, bezogen auf das Gewicht der Farbstoffzubereitung, einer eingangs näher bezeichneten Farbstoffmischung sowie 40 bis 90 Gew.-%, bezogen auf das Gewicht der Farbstoffpräparation, Dispergiermittel, weitere Hilfsmittel und/oder Wasser.

Die zweitgenannten neuen Farbstoffmischungen eignen sich zum Färben oder Bedrucken von textilen Materialien. Erfindungsgemäß sind darunter textile Materialien, wie Fasern, Gewirke oder Gewebe aus Polyester, modifiziertem Polyester, z. B. anionisch modifiziertem Polyester, oder Mischgewebe von Polyestern mit Cellulose, Baumwolle, Viskose oder Wolle zu verstehen. Die Färbe- und Druckverfahren sind an sich bekannt. Nähere Einzelheiten können auch den Beispielen entnommen werden. Insbesondere hervorzuheben ist die Anwendung dieser Farbstoffmischungen zum Färben oder Bedrucken von textilen Materialien, die im Automobilbereich verwendet werden.

Die zweitgenannten erfindungsgemäßen, farbstarken Farbstoffmischungen zeichnen sich durch eine hohe Heißlichtechtheit aus (FA-KRA, DIN 75 202). Dies gilt auch bei hoher Bestrahlungsenergie (Prüfung nach SAE J1 885, 601 kJ). Sie ergeben Färbungen mit hoher Reproduzierbarkeit (pH- und Reduktionsbeständigkeit). Sie weisen hohe Farbstärke, hohe Echtheitswerte (z.B. Reibechtheit, Schweißechtheit, Wassertropfenechtheit, Wasserechtheit oder Lösungsmittelechtheit) sowie eine hohe Kontakthitzebeständigkeit auf.

Die folgenden Beispiele sollen die Erfindung näher erläutern. Die Prozentangaben in den Beispielen 1 bis 7 bezüglich der Zusammensetzung der Farbstoffmischungen sind die aus den jeweiligen HPLC-Untersuchungen resultierenden Flächenprozente.

Beispiel 1

a) 16,3 g 2-Amino-3,5-dicyano-4-methylthiophen wurden in 250 g 65 gew.-%iger Schwefelsäure unter Kühlung aufgelöst. Dazu tropfte man unter weiterer Kühlung bei 0 bis +5°C 31,5 g Nitrosylschwefelsäure (40 gew.-%ig) und rührte 1,5 h bei dieser Temperatur nach.

b) Ein Gemisch aus 17 g wasserfeuchtem 2-Chlor-3-cyano-4-methyl-6-aminopyridin und dem entsprechenden 6-Chlor-2-amino-Isomeren (berechnet trocken und erhalten nach dem in der DE-A-2 260 827 beschriebenen Verfahren), 20 ml Isobutanol, 11,8 g 1-Amino-8-hydroxy-4-oxaoctan, 4,7 g 1-Amino-5-hydroxy-3-oxapentan und 8 g Soda wurde am absteigenden Kühler 5 h bei 145 bis 150°C gerührt. Nach dem Abkühlen auf 100°C wurden 35 ml Essigsäure und bei 35 bis 40°C unter leichter Kühlung 15 g 96 gew.-%ige Schwefelsäure zugetropft. Nach dreistündigem Rühren waren ca. 92 % der vier Hydroxyverbindungen acetyliert.

c) In die gut gerührte Mischung aus den so erhaltenen Kupplungskomponenten, 300 g Eis und 100 ml Wasser ließ man die Lösung des unter a) beschriebenen Diazoniumsalzes einlaufen und rührte ca. 2 h bei 0 bis 5°C nach. Man saugte ab, wusch neutral und trocknete bei 100°C unter vermindertem Druck.

Das resultierende braune Pulver besteht aus den acht Farbstoffindividuen:

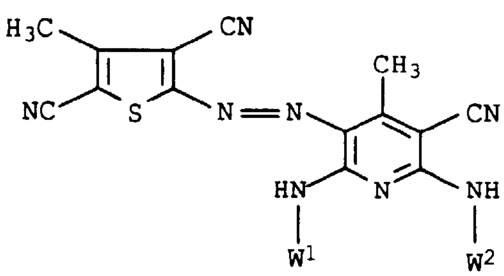

| | | | |
|---|---|---|---|
| 1. | $W^1$ =<br>$W^2$ = | H<br>$(CH_2)_3$-O-$(CH_2)_4$-OH | 5,2 % |
| 2. | $W^1$ =<br>$W^2$ = | $(CH_2)_3$-O-$(CH_2)_4$-OH<br>H | 2,5 % |
| 3. | $W^1$ =<br>$W^2$ = | H<br>$(CH_2)_3$-O-$(CH_2)_4$-$OCOCH_3$ | 39,6 % |
| 4. | $W^1$ =<br>$W^2$ = | $(CH_2)_3$-O-$(CH_2)_4$-$OCOCH_3$<br>H | 18,8 % |
| 5. | $W^1$ =<br>$W^2$ = | H<br>$(CH_2)_2$-O-$(CH_2)_2$-OH | 6,2 % |
| 6. | $W^1$ =<br>$W^2$ = | $(CH_2)_2$-O-$(CH_2)_2$-OH<br>H | 2,4 % |
| 7. | $W^1$ =<br>$W^2$ = | H<br>$(CH_2)_2$-O-$(CH_2)_2$-$OCOCH_3$ | 15,1 % |
| 8. | $W^1$ =<br>$W^2$ = | $(CH_2)_2$-O-$(CH_2)_2$-$OCOCH_3$<br>H | 6,7 % |

Eine Dispersion dieses Farbstoffgemisches färbt Garnwickel aus Polyester (PES) bei 130°C ohne Abfiltration bis 2/1 Richttyptiefe in brillantem Rotton.

Beispiel 2

a) Das in Beispiel 1 b) erhaltene Reaktionsgemisch wurde vor der Behandlung mit Essigsäure mit 20 ml Wasser versetzt und mit Salzsäure auf einen pH-Wert von 5 gebracht. Die organische Phase wurde abgetrennt, mit weiterer Salzsäure in Wasser bei einem pH-Wert von 3 gelöst und mit dem unter Beispiel 1 a) beschriebenen Diazoniumsalz gekuppelt. Durch Puffern mit Natronlauge bis zu einem pH-Wert von 4, Absaugen, Waschen mit heißem Wasser und Trocknen bei 100°C wurde ein pulverförmiges Farbstoffgemisch erhalten. Es wies folqende Komponenten auf:

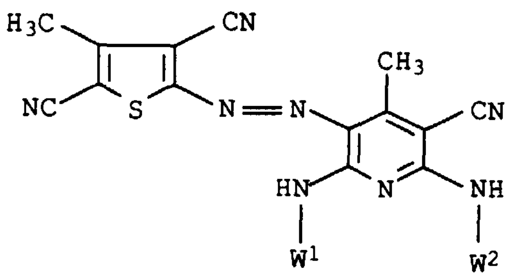

| | | |
|---|---|---|
| 1. | $W^1$ = | H |
| | $W^2$ = | $(CH_2)_3$-O-$(CH_2)_4$-OH |
| 2. | $W^1$ = | $(CH_2)_3$-O-$(CH_2)_4$-OH |
| | $W^2$ = | H |
| 3. | $W^1$ = | H |

(fortgesetzt)

| | | |
|---|---|---|
| | $W^2$ = | $(CH_2)_2$-O-$(CH_2)_2$-OH |
| 4. | $W^1$ = | $(CH_2)_2$-O-$(CH_2)_2$-OH |
| | $W^2$ = | H |

b) Zur Teilacetylierung wurden 47,5 g dieses Farbstoffgemisches in 110 ml Eisessig 4 h unter Rückfluß gerührt. Durch Zugabe von 110 ml Wasser unter Rückfluß und einstündiges Nachrühren erfolgte Kristallisation. Durch Abpressen bei Raumtemperatur und Waschen mit heißem Wasser wurde ein kristallines Preßgut erhalten, dessen Dispersion beim Färben von Garnwickeln aus Polyester kein Kristallwachstum zeigt und demzufolge keine Abfiltration mehr auftritt. Das braunfarbene Nutschgut weist einen Schmelzpunkt von 188 bis 190°C auf.

Die Einzelindividuen des Beispiels 1 liegen hier in den folgenden Verhältnissen vor:

| | | | |
|---|---|---|---|
| 1. | 4,4 % | 5. | 5,6 % |
| 2. | 2,0 % | 6. | 2,1 % |
| 3. | 41,7 % | 7. | 16,2 % |
| 4. | 17,6 % | 8. | 6,1 % |

Beispiel 3 (Vergleich)

Man verzichtete in Beispiel 1b auf die Verwendung von 1-Amino-5-hydroxy-3-oxapentan und verwendete statt dessen 17 g 1-Amino-8-hydroxy-4-oxaoctan. Man verfuhr dann weiter analog Beispiel 2 und erhielt eine Farbstoffmischung, wie sie in ähnlicher Form in Beispiel 1 der US-A-4 855 413 beschrieben ist. Die Einzelindividuen sind darin in folgenden Verhältnissen vertreten:

| | | | |
|---|---|---|---|
| 1. | 32,4 % | 3. | 45,2 % |
| 2. | 7,8 % | 4. | 11,6 % |

Das grünliche Farbstoffpulver (Fp.: 185 bis 190°C) zeigt bei der Färbung von PES-Garnwickeln aus Dispersion Abfiltration auf dem Färbegut.

Veränderungen der Acylierungsbedingungen bezüglich Zeit, Temperatur oder des Wassergehalts des Acylierungsgemisches verändern den Acetylierungsgrad nur unwesentlich und führen nicht zu beanstandungsfreien Garnfärbungen.

Einwandfreie Garnanfärbungen werden weiterhin gewährleistet, wenn man in den Beispielen 1 und 2 anstatt 2-Amino-5-hydroxy-oxapentan die in der folgenden Tabelle 1 aufgeführten Amine in den angegebenen mol-Anteilen verwendet.

Die Farbstoffgemische bestehen dann jeweils aus sechs Einzelfarbstoffen:

Tabelle 1

| Beisp. Nr. | Aminrest | mol-% | Kristall-farbe | Fp. |
|---|---|---|---|---|
| 4 | $(CH_2)_3$-O-$(CH_2)_2$-O— 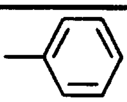 | 20 | braun | 174-180 |
| 5 | $(CH_2)_3$-O-$(CH_2)_2$-$OC_2H_5$ | 50 | braun | 190-196 |
| 6 | $(CH_2)_3$-O-CH-$CH_2$-$OCH_3$<br>\|<br>$CH_3$ | 50 | braun | 181-190 |

Beispiel 7

Wird in Beispiel 1 1-Amino-8-hydroxy-4-oxaoctan durch die äquivalente Menge l-Amino-8-hydroxy-4,7-dioxaoctan ersetzt und gemäß Beispiel 2 weiterverfahren, so resultiert ein Gemisch aus sechs Farbstoffen der Zusammensetzung:

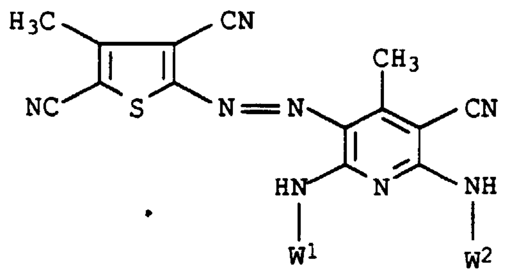

| | | | |
|---|---|---|---|
| 1. | $W^1$ = <br> $W^2$ = | H <br> $(CH_2)_3$-O-$(CH_2)_2$-$OCH_3$ | 43,7 % |
| 2. | $W^1$ = <br> $W^2$ = | $(CH_2)_3$-O-$(CH_2)_2$-$OCH_3$ <br> H | 22,1 % |
| 3. | $W^1$ = <br> $W^2$ = | H <br> $(CH_2)_2$-O-$(CH_2)_2$-OH | 5,8 % |
| 4. | $W^1$ = <br> $W^2$ = | $(CH_2)_2$-O-$(CH_2)_2$-OH <br> H | 2,8 % |
| 5. | $W^1$ = <br> $W^2$ = | H <br> $(CH_2)_2$-O-$(CH_2)_2$-$OCOCH_3$ | 16,2 % |
| 6. | $W^1$ = <br> $W^2$ = | $(CH_2)_2$-O-$(CH_2)_2$-$OCOCH_3$ <br> H | 6,7 % |

(Fp.: 177°C) dessen PES-Garnfärbungen bis 2/1 Richttyptiefe einwandfrei ausfallen.

Wird in Beispiel 2 das Diazoniumsalz durch dasjenige der in der folgenden Tabelle 2 aufgeführten Amine ersetzt, so werden die Farbstoffe als Mischungen mit 8 Komponenten erhalten, deren Zusammensetzung sich jeweils nur unwesentlich von der des Beispiels 2 unterscheidet. Auch sie weisen gute Färbeeigenschaften auf.

Tabelle 2

| Beisp. Nr. | Amin | Farbton auf PES |
|---|---|---|
| 8 | 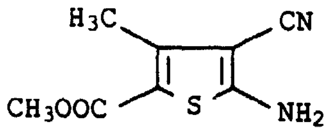 | rot |
| 9 | 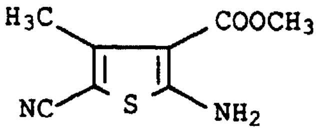 | rot |
| 10 | 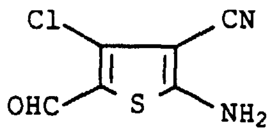 | violett |

| Beisp. Nr. | Amin | Farbton auf PES |
|---|---|---|
| 11 | 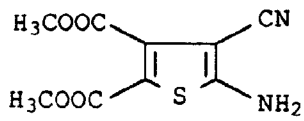 | rot |
| 12 | 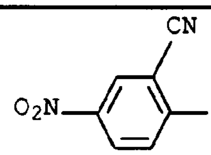 | scharlach |
| 13 | 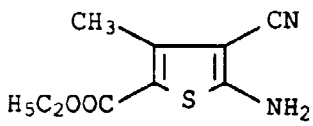 | rot |
| 14 | 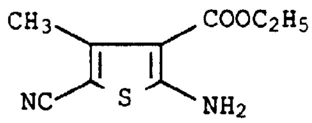 | rot |
| 15 | 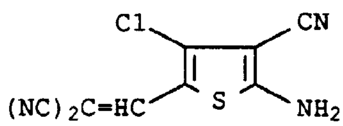 | blauviolett |
| 16 | 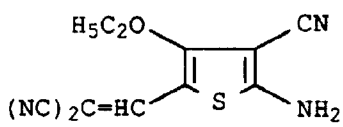 | mittelblau |
| 17 | 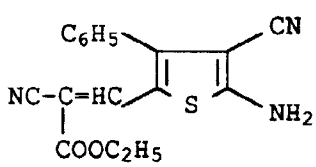 | blauviolett |
| 18 | 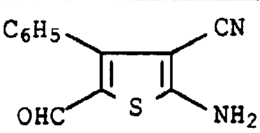 | blaustichig rot |
| 19 | 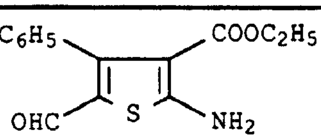 | rot |
| 20 | 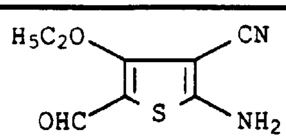 | violett |

| Beisp. Nr. | Amin | Farbton auf PES |
|---|---|---|
| 21 | 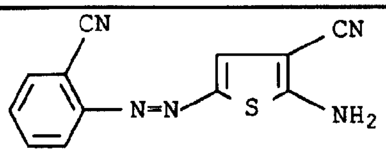 | blau |
| 22 | 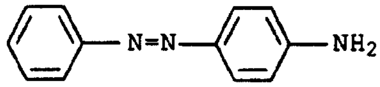 | orange |
| 23 | 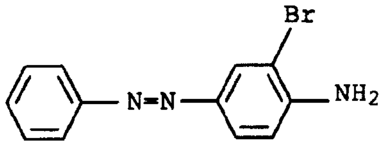 | gelbstichig rot |
| 24 | 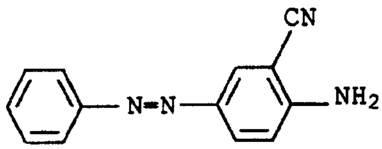 | rot |
| 25 | 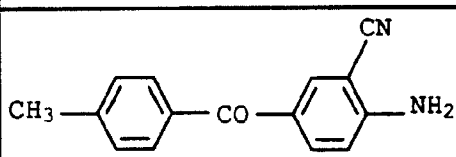 | gelbstichig rot |
| 26 | 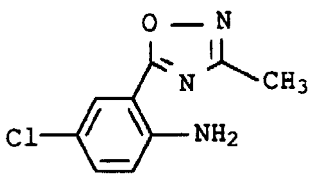 | gelb |
| 27 | 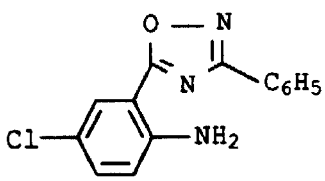 | gelb |
| 28 | 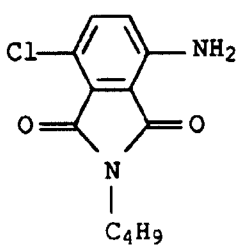 | gelb |
| 29 | 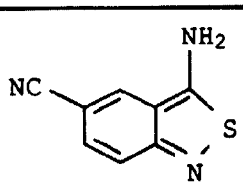 | rot |

| Beisp. Nr. | Amin | Farbton auf PES |
|---|---|---|
| 30 | 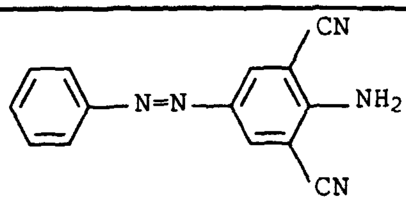 | blaustichig rot |
| 31 | 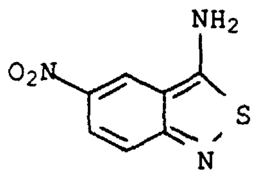 | violett |

Färbevorschrift

5 g Polyestergewebe (PES) werden bei einer Temperatur von 50°C in 100 ml einer Färbeflotte gegeben, die eine im folgenden näher bezeichnete Farbstoffmischung enthält und deren pH-Wert mittels Essigsäure/Natriumacetat auf 4,5 eingestellt ist. Man behandelt 5 Minuten bei 50°C, steigert dann die Temperatur der Flotte auf 130°C, hält 45 Minuten bei dieser Temperatur und läßt dann innerhalb von 20 Minuten auf 70°C abkühlen.

Danach wird das ausgefärbte Polyestergewebe reduktiv gereinigt, indem man es 15 Minuten in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 70°C behandelt. Schließlich wird das Gewebe gespült, mit verdünnter Essigsäure neutralisiert, nochmals gespült und getrocknet.

Folgende Farbstoffmischungen kamen zur Anwendung.

Farbstoffmischung 32

| Formel | Menge, bezogen auf PES [Gew.%] |
|---|---|
| a) 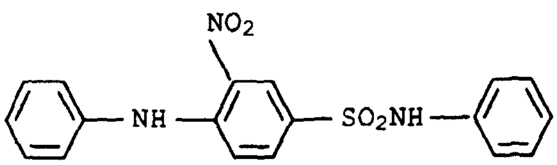 | 0,15 |

b) Mischung der folgenden Farbstoffe 0,02

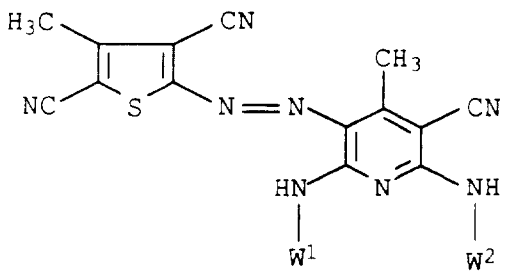

| | | |
|---|---|---|
| 1. | $W^1$ =<br>$W^2$ = | H<br>$(CH_2)_3-O-(CH_2)_4-OH$ |
| 2. | $W^1$ =<br>$W^2$ = | $(CH_2)_3-O-(CH_2)_4-OH$<br>H |
| 3. | $W^1$ =<br>$W^2$ = | H<br>$(CH_2)_3-O-(CH_2)_4-OCOCH_3$ |
| 4. | $W^1$ =<br>$W^2$ = | $(CH_2)_3-O-(CH_2)_4-OCOCH_3$<br>H |
| 5. | $W^1$ =<br>$W^2$ = | H<br>$(CH_2)_2-O-(CH_2)_2-OH$ |
| 6. | $W^1$ =<br>$W^2$ = | $(CH_2)_2-O-(CH_2)_2-OH$<br>H |
| 7. | $W^1$ =<br>$W^2$ = | H<br>$(CH_2)_2-O-(CH_2)_2-OCOCH_3$ |
| 8. | $W^1$ =<br>$W^2$ = | $(CH_2)_2-O-(CH_2)_2-OCOCH_3$<br>H |

c) 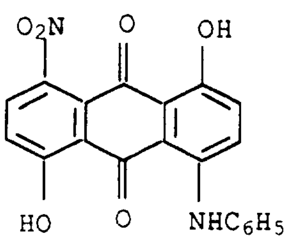 0,06

d) 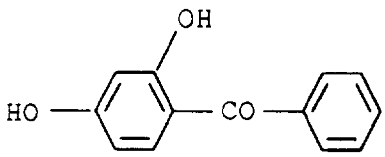 1,2

Farbstoffmischung 33

| Formel | Menge, bezogen auf PES [Gew.%] |
|---|---|
| a) 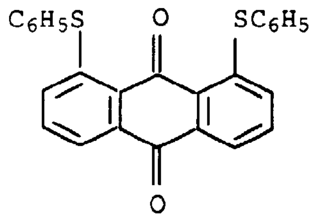 | 0,06 |
| b) Mischung der folgenden Farbstoffe | 0,02 |

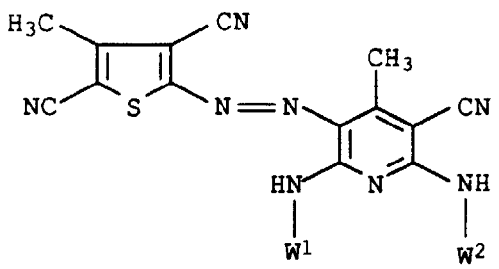

| | | |
|---|---|---|
| 1. | $W^1$ = <br> $W^2$ = | H <br> $(CH_2)_3$-O-$(CH_2)_4$-OH |
| 2. | $W^1$ = <br> $W^2$ = | $(CH_2)_3$-O-$(CH_2)_4$-OH <br> H |
| 3. | $W^1$ = <br> $W^2$ = | H <br> $(CH_2)_3$-O-$(CH_2)_4$-$OCOCH_3$ |
| 4. | $W^1$ = <br> $W^2$ = | $(CH_2)_3$-O-$(CH_2)_4$-$OCOCH_3$ <br> H |
| 5. | $W^1$ = <br> $W^2$ = | H <br> $(CH_2)_2$-O-$(CH_2)_2$-OH |
| 6. | $W^1$ = <br> $W^2$ = | $(CH_2)_2$-O-$(CH_2)_2$-OH <br> H |
| 7. | $W^1$ = <br> $W^2$ = | H <br> $(CH_2)_2$-O-$(CH_2)_2$-$OCOCH_3$ |
| 8. | $W^1$ = <br> $W^2$ = | $(CH_2)_2$-O-$(CH_2)_2$-$OCOCH_3$ <br> H |

| | | |
|---|---|---|
| c) | 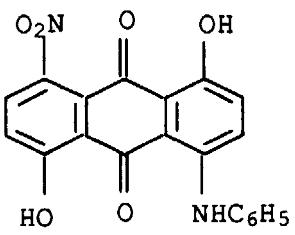 | 0,08 |
| d) | 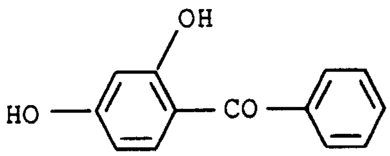 | 1,2 |

Dabei wurden folgende Werte gefunden:

Farbstoffmischung 32 $\Delta E^{*}_{ab}$ <1,5

Farbstoffmischung 33 $\Delta E^{*}_{ab}$ <1,0

(Die Ermittlung des $\Delta E^{*}_{ab}$ -Werts erfolgte nach dem L*a*b* Farbsystem (CIE 1976).)

## Patentansprüche

**1.** Farbstoffmischungen, enthaltend mindestens 6 gleichfarbige Farbstoffe der Formel I

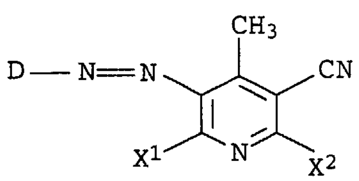 (I),

in der

D für den Rest einer Diazokomponente aus der Anilin-, Aminothiophen-, Aminothiazol-, Aminoisothiazol- oder Aminobenzisothiazolreihe und einer der Reste $X^1$ und $X^2$ für Amino und der andere für einen Rest der Formel

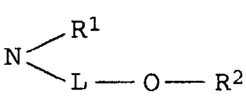

stehen, worin

L $C_2$-$C_8$-Alkylen, das gegebenenfalls durch 1 oder 2 Sauerstoffatome in Etherfunktion unterbrochen ist,

$R^1$ Wasserstoff oder $C_1$-$C_4$-Alkyl, das gegenenfalls durch Hydroxy, $C_1$-$C_4$-Alkoxy oder $C_1$-$C_8$-Alkanoyloxy substituiert ist, und

$R^2$ Wasserstoff, $C_1$-$C_4$-Alkyl, Benzyl, Phenyl oder $C_1$-$C_8$-Alkanoyl bedeuten, wobei die Farbstoffe der Formel I mindestens zwei verschiedene Reste

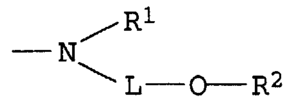

aufweisen und für mindestens einen dieser Reste gilt, daß $R^2$ Wasserstoff oder $C_1$-$C_8$-Alkanoyl bedeutet.

**2.** Farbstoffmischungen nach Anspruch 1, dadurch gekennzeichnet daß

D für einen Rest der Formel

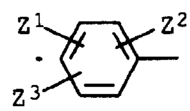

,

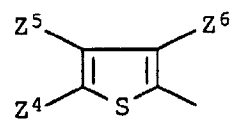

,

(IIa) (IIb)

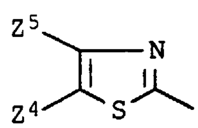

,

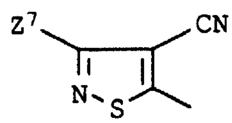

oder

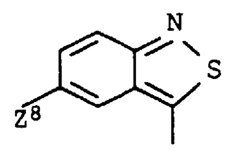

(IIc) (IId) (IIe)

steht, worin

$Z^1$ Wasserstoff, Nitro, Cyano, $C_1$-$C_9$-Alkoxycarbonyl, das durch 1 oder 2 Sauerstoffatome in Etherfunktion unterbrochen sein kann, $C_1$-$C_9$-Alkylaminocarbonyl, das durch 1 oder 2 Sauerstoffatome in Etherfunktion unterbrochen sein kann, Trifluormethyl, $C_1$-$C_4$-Alkylsulfonyl, 3-($C_1$-$C_4$-Alkyl)-1,2,4-oxadiazol-5-yl oder 3-Phenyl-1,2,4-oxadiazol-5-yl,

$Z^2$ Wasserstoff, Chlor, Brom, Cyano, Methyl, Methoxy, Ethoxy, Phenylazo oder Benzoyl, das gegebenenfalls durch Methyl, Methoxy oder Chlor substituiert ist,

$Z^3$ Wasserstoff, Cyano, Chlor, Brom oder $C_1$-$C_9$-Alkoxycarbonyl, das durch 1 oder 2 Sauerstoffatome in Etherfunktion unterbrochen sein kann, oder $Z^2$ und $Z^3$ zusammen einen Rest der Formel CO-N$A^1$-CO, worin $A^1$ die Bedeutung von Wasserstoff oder $C_1$-$C_4$-Alkyl besitzt,

$Z^4$ Cyano, Formyl, Nitro, $C_1$-$C_9$-Alkoxycarbonyl, das durch 1 oder 2 Sauerstoffatome in Etherfunktion unterbrochen sein kann, gegebenenfalls durch Cyano substituiertes Phenylazo oder einen Rest der Formel

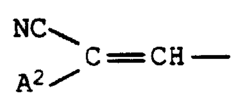

,

worin $A^2$ die Bedeutung von Cyano oder $C_1$-$C_9$-Alkoxycarbonyl, das durch 1 oder 2 Sauerstoffatome in Etherfunktion unterbrochen sein kann, besitzt,

$Z^5$ Wasserstoff, $C_1$-$C_4$-Alkyl, $C_1$-$C_4$-Alkoxy, Phenyl, das gegebenenfalls durch Methyl, Methoxy oder Chlor substituiert ist, Benzyl, das gegebenenfalls durch Methyl, Methoxy oder Chlor substituiert ist, $C_1$-$C_4$-Alkylsulfonyl, Chlor, Brom oder $C_1$-$C_9$-Alkoxycarbonyl, das durch 1 oder 2 Sauerstoffatome in Etherfunktion unterbrochen sein kann,

$Z^6$ $C_1$-$C_4$-Alkyl, Phenyl, das gegebenenfalls durch Methyl, Methoxy oder Chlor substituiert ist, Benzyl, das gegebenenfalls durch Methyl, Methoxy oder Chlor substituiert ist, Cyano, Nitro, $C_1$-$C_9$-Alkoxycarbonyl, das durch

1 oder 2 Sauerstoffatome in Etherfunktion unterbrochen sein kann oder $C_1$-$C_4$-Alkylsulfonyl,

$Z^7$ $C_1$-$C_4$-Alkyl, Phenyl, das gegebenenfalls durch Methyl, Methoxy oder Chlor substituiert ist, Benzyl, das gegebenenfalls durch Methyl, Methoxy oder Chlor substituiert ist, oder $C_1$-$C_4$-Alkylsulfonyl, und

$Z^8$ Nitro, Cyano oder $C_1$-$C_4$-Alkylsulfonyl bedeuten.

**3.** Farbstoffmischungen nach Anspruch 1, dadurch gekennzeichnet, daß sie 6 bis 12 gleichfarbige Farbstoffe der Formel I enthalten.

**4.** Farbstoffmischungen nach Anspruch 1, dadurch gekennzeichnet, daß D einen Rest der Formel IIb, IIc oder IId bedeutet.

**5.** Verwendung der Farbstoffmischungen gemäß Anspruch 1 zum Färben oder Bedrucken von textilen Materialien.

**6.** Farbstoffmischungen, enthaltend einen oder mehrere rote Azofarbstoffe der Formel IX

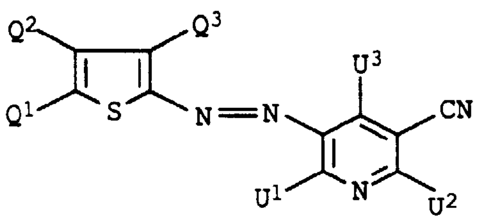

(IX),

in der
einer der Reste $U^1$ und $U^2$ für einen Rest der Formel

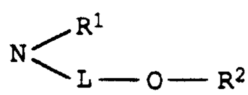

und der andere für einen Rest der Formel NH-B worin

L $C_2$-$C_8$-Alkylen, das gegebenenfalls durch 1 oder 2 Sauerstoffatome in Etherfunktion unterbrochen ist,

$R^1$ Wasserstoff oder $C_1$-$C_4$-Alkyl, das gegenenfalls durch Hydroxy, $C_1$-$C_4$-Alkoxy oder $C_1$-$C_8$-Alkanoyloxy substituiert ist,

$R^2$ Wasserstoff, $C_1$-$C_4$-Alkyl, Benzyl, Phenyl oder $C_1$-$C_8$-Alkanoyl und

B Wasserstoff, $C_1$-$C_4$-Alkyl, das gegebenenfalls durch Hydroxy substituiert ist, oder einen Rest der Formel L-O-$R^2$, wobei L und $R^2$ jeweils die obengenannte Bedeutung besitzen, bedeuten,

$U^3$ für Wasserstoff oder $C_1$-$C_4$-Alkyl,

$Q^1$ für Cyano, Formyl, Nitro oder $C_1$-$C_9$-Alkoxycarbonyl, das durch 1 oder 2 Sauerstoffatome in Etherfunktion unterbrochen sein kann,

$Q^2$ für Wasserstoff, $C_1$-$C_4$-Alkyl, $C_1$-$C_4$-Alkoxy, Phenyl, das gegebenenfalls durch Methyl, Methoxy oder Chlor substituiert ist, Benzyl, das gegebenenfalls durch Methyl, Methoxy oder Chlor substituiert ist, $C_1$-$C_4$-Alkylsulfonyl, Chlor, Brom oder $C_1$-$C_9$-Alkoxycarbonyl, das durch 1 oder 2 Sauerstoffatome in Etherfunktion unterbrochen sein kann, und

$Q^3$ für Cyano, Nitro, $C_1$-$C_9$-Alkoxycarbonyl, das durch 1 oder 2 Sauerstoffatome in Etherfunktion unterbrochen sein kann oder $C_1$-$C_4$-Alkylsulfonyl stehen,

einen oder mehrere gelbe Farbstoffe der Formel X und/oder XI

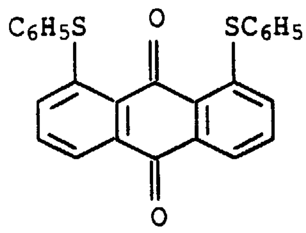

(X),

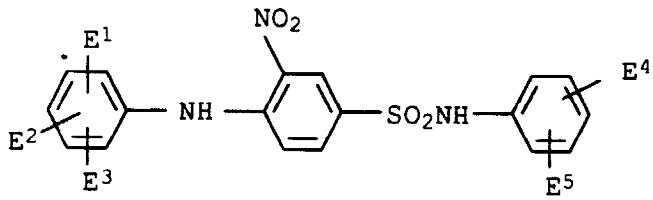

(XI),

worin

| | |
|---|---|
| $E^1$, $E^2$, $E^3$, $E^4$ und $E^5$ | unabhängig voneinander jeweils für Wasserstoff, $C_1$-$C_4$-Alkyl, $C_1$-$C_4$-Alkoxy, Halogen oder Phenoxy stehen, |

und/oder einen oder mehrere blaue Anthrachinonfarbstoffe der Formel XII

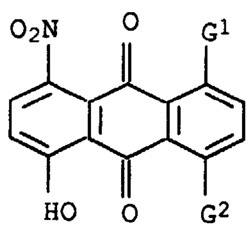

(XII),

,

in der
einer der beiden Reste $G^1$ und $G^2$ für Hydroxy und der andere für Phenylamino, das gegebenenfalls durch Hydroxy, $C_1$-$C_4$-Alkyl oder $C_1$-$C_4$-Alkoxy substituiert ist, steht, Farbstoffzubereitungen, enthaltend diese Farbstoffmischungen, sowie deren Verwendung zum Färben oder Bedrucken von textilen Materialien.

**7.** Farbstoffmischungen nach Anspruch 6, dadurch gekennzeichnet, daß einer der Reste $U^1$ und $U^2$ für Amino und der andere für einen Rest der Formel

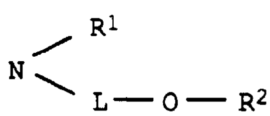

steht, worin L, $R^1$ und $R^2$ jeweils die in Anspruch 6 genannte Bedeutung besitzen.

**8.** Farbstoffmischungen nach Anspruch 6, dadurch gekennzeichnet, daß sie mindestens 6 Azofarbstoffe der Formel IX enthalten.

**9.** Farbstoffmischungen nach Anspruch 6, dadurch gekennzeichnet, daß sie bis zu 30 Gew.-%, bezogen auf das Gesamtgewicht der Farbstoffe IX, X, XI und/oder XII, eines oder mehrerer Nuancierfarbstoffe aufweisen.

**10.** Verwendung der Farbstoffmischungen gemäß Anspruch 6 zum Färben oder Bedrucken von textilen Materialien.

## Claims

**1.** A dye mixture, comprising at least six isochromatic dyes of the formula I

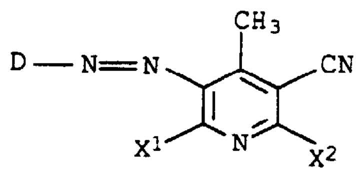

(I),

where

D is the radical of a diazo component from the aniline, aminothiophene, aminothiazole, aminoisothiazole or aminobenzisothiazole series and

one of the radicals $X^1$ and $X^2$ is amino and the other is a radical of the formula

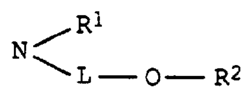

where

L is $C_2$-$C_8$-alkylene which is uninterrupted or interrupted by one or two oxygen atoms in an ether function,
$R^1$ is hydrogen or $C_1$-$C_4$-alkyl which is unsubstituted or substituted by hydroxyl, $C_1$-$C_4$-alkoxy or $C_1$-$C_8$-alkanoyloxy, and
$R^2$ is hydrogen, $C_1$-$C_4$-alkyl, benzyl, phenyl or $C_1$-$C_8$-alkanoyl,
the dyes of the formula I having at least two different radicals

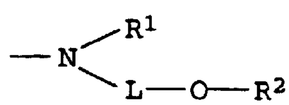

and it being the case for at least one of these radicals that $R^2$ is hydrogen or $C_1$-$C_8$-alkanoyl.

**2.** A dye mixture as claimed in claim 1, wherein

D is a radical of the formula

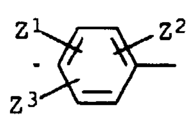

,

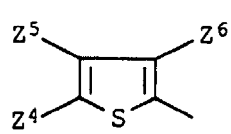

,

(IIa) (IIb)

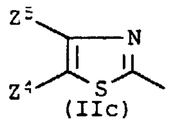 (IIc) , 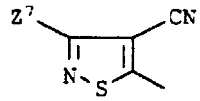 (IId) or 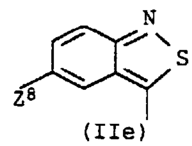 (IIe)

where

$Z^1$ is hydrogen, nitro, cyano, $C_1$-$C_9$-alkoxycarbonyl which can be interrupted by one or two oxygen atoms in an ether function, $C_1$-$C_9$-alkylaminocarbonyl which can be interrupted by one or two oxygen atoms in an ether function, trifluoromethyl, $C_1$-$C_4$-alkylsulfonyl, 3-($C_1$-$C_4$-alkyl)-1,2,4-oxadiazol-5-yl or 3-phenyl-1,2,4-oxadiazol-5-yl,

$Z^2$ is hydrogen, chlorine, bromine, cyano, methyl, methoxy, ethoxy, phenylazo or benzoyl which is unsubstituted or substituted by methyl, methoxy or chlorine,

$Z^3$ is hydrogen, cyano, chlorine, bromine or $C_1$-$C_9$-alkoxy-carbonyl which can be interrupted by one or two oxygen atoms in an ether function, or $Z^2$ and $Z^3$ together are a radical of the formula CO-$NA^1$-CO, where $A^1$ has the meaning of hydrogen or $C_1$-$C_4$-alkyl,

$Z^4$ is cyano, formyl, nitro, $C_1$-$C_9$-alkoxycarbonyl which can be interrupted by one or two oxygen atoms in an ether function, or is unsubstituted or cyano-substituted phenylazo or a radical of the formula

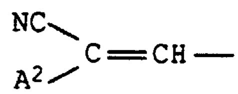 ,

where $A^2$ has the meaning of cyano or $C_1$-$C_9$-alkoxycarbonyl which can be interrupted by one or two oxygen atoms in an ether function,

$Z^5$ is hydrogen, $C_1$-$C_4$-alkyl, $C_1$-$C_4$-alkoxy, phenyl which is unsubstituted or substituted by methyl, methoxy or chlorine, benzyl which is unsubstituted or substituted by methyl, methoxy or chlorine, $C_1$-$C_4$-alkylsulfonyl, chlorine, bromine or $C_1$-$C_9$-alkoxycarbonyl which can be interrupted by one or two oxygen atoms in an ether function,

$Z^6$ is $C_1$-$C_4$-alkyl, phenyl which is unsubstituted or substituted by methyl, methoxy or chlorine, benzyl which is unsubstituted or substituted by methyl, methoxy or chlorine, cyano, nitro, $C_1$-$C_9$-alkoxycarbonyl which can be interrupted by one or two oxygen atoms in an ether function, or $C_1$-$C_4$-alkylsulfonyl,

$Z^7$ is $C_1$-$C_4$-alkyl, phenyl which is unsubstituted or substituted by methyl, methoxy or chlorine, benzyl which is unsubstituted or substituted by methyl, methoxy or chlorine, or $C_1$-$C_4$-alkylsulfonyl, and

$Z^8$ is nitro, cyano or $C_1$-$C_4$-alkylsulfonyl.

**3.** A dye mixture as claimed in claim 1, comprising from 6 to 12 isochromatic dyes of the formula I.

**4.** A dye mixture as claimed in claim 1, wherein D is a radical of the formula IIb, IIc or IId.

**5.** The use of the dye mixture as claimed in claim 1 for dyeing or printing textile materials.

**6.** A dye mixture comprising one or more red azo dyes of the formula IX

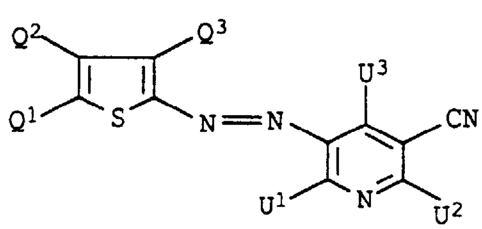 (IX),

where

one of $U^1$ and $U^2$ is a radical of the formula

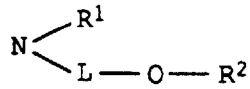

and the other is a radical of the formula NH-B, where

- L is $C_2$-$C_8$-alkylene, which may be interrupted by 1 or 2 oxygen atoms in ether function,
- $R^1$ is hydrogen or $C_1$-$C_4$-alkyl, which may be substituted by hydroxyl, $C_1$-$C_4$-alkoxy or $C_1$-$C_8$-alkanoyloxy,
- $R^2$ is hydrogen, $C_1$-$C_4$-alkyl, benzyl, phenyl or $C_1$-$C_8$-alkanoyl and
- B is hydrogen, $C_1$-$C_4$-alkyl which may be hydroxyl-substituted, or a radical of the formula L-O-$R^2$, where L and $R^2$ are each as defined above,

- $U^3$ is hydrogen or $C_1$-$C_4$-alkyl,
- $Q^1$ is cyano, formyl, nitro or $C_1$-$C_9$-alkoxycarbonyl, which may be interrupted by 1 or 2 oxygen atoms in ether function,
- $Q^2$ is hydrogen, $C_1$-$C_4$-alkyl, $C_1$-$C_4$-alkoxy, phenyl, which may be methyl-, methoxy- or chlorine-substituted, benzyl, which may be methyl-, methoxy- or chlorine-substituted, $C_1$-$C_4$-alkylsulfonyl, chlorine, bromine or $C_1$-$C_9$-alkoxycarbonyl, which may be interrupted by 1 or 2 oxygen atoms in ether function, and
- $Q^3$ is cyano, nitro, $C_1$-$C_9$-alkoxycarbonyl, which may be interrupted by 1 or 2 oxygen atoms in ether function, or $C_1$-$C_4$-alkylsulfonyl, one or more yellow dyes of the formula X and/or XI

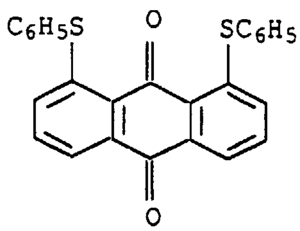

(X),

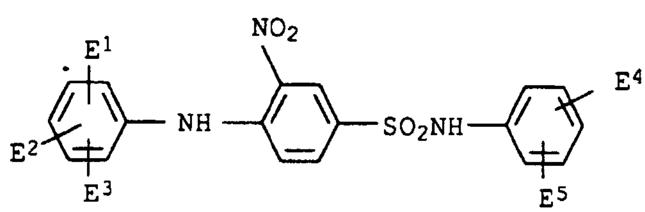

(XI),

where

$E^1$, $E^2$, $E^3$, $E^4$ and $E^5$ are independently of each other hydrogen, $C_1$-$C_4$-alkyl, $C_1$-$C_4$-alkoxy, halogen or phenoxy,

and/or one or more blue anthraquinone dyes of the formula XII

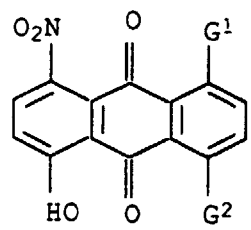

(XII),

where
one of the two radicals $G^1$ and $G^2$ is hydroxyl and the other is phenylamino, which may be substituted by hydroxyl, $C_1$-$C_4$-alkyl or $C_1$-$C_4$-alkoxy, a dye preparation comprising this dye mixture and the use thereof for dyeing or printing textile materials.

**7.** A dye mixture as claimed in claim 6, wherein one of $U^1$ and $U^2$ is amino and the other is a radical of the formula

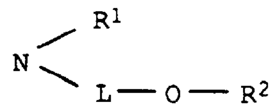

where L, $R^1$ and $R^2$ are each as defined in claim 6.

**8.** A dye mixture as claimed in claim 6, comprising at least 6 azo dyes of the formula IX.

**9.** A dye mixture as claimed in claim 6, including up to 30% by weight, based on the total weight of the dyes IX, X, XI and/or XII, of one or more shading dyes.

**10.** The use of the dye mixture of claim 6 for dyeing or printing textile materials.

**Revendications**

**1.** Mélanges de colorants, contenant au moins 6 colorants de la même couleur de formule I

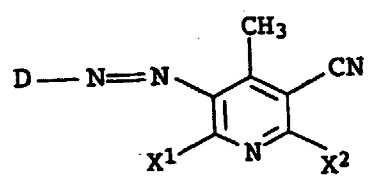

(I),

dans laquelle

D représente le reste d'un composant diazoïque de la série de l'aniline, de l'aminothiophène, de l'aminothiazole, de l'aminoisothiazole ou de l'aminobenzisothiazole et
un des restes $X^1$ et $X^2$ est mis pour un groupement amino et l'autre pour un reste de formule

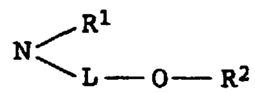

où

L représente un groupement alkylène en $C_2$-$C_8$, pouvant être interrompu par 1 ou 2 atomes d'oxygène en fonction éther,

$R^1$ représente un atome d'hydrogène ou un groupement alkyle en $C_1$-$C_4$, pouvant être substitué par des groupements hydroxy, alcoxy en $C_1$-$C_4$ ou alcanoyloxy en $C_1$-$C_8$, et

$R^2$ représente un atome d'hydrogène, un groupement alkyle en $C_1$-$C_4$, benzyle, phényle ou alcanoyle en $C_1$-$C_8$, où les colorants de formule I présentent au moins deux restes différents

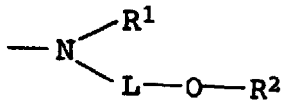

et que, pour au moins l'un de ces restes, $R^2$ représente un atome d'hydrogène ou un groupement alcanoyle en $C_1$-$C_8$.

**2.** Mélanges de colorants selon la revendication 1, caractérisés en ce que

D est mis pour un reste de formule

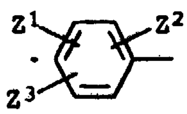

,

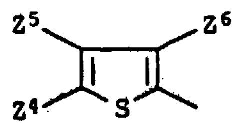

,

(IIa) (IIb)

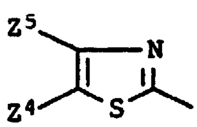

,

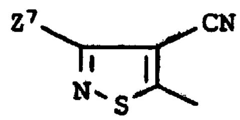

ou

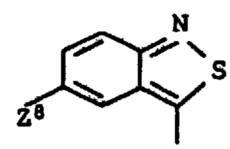

(IIc) (IId) (IIe)

dans lesquelles

$Z^1$ représente un atome d'hydrogène, un groupement nitro, cyano, alcoxycarbonyle en $C_1$-$C_9$, pouvant être interrompu par 1 ou 2 atomes d'oxygène en fonction éther, un groupement alkylaminocarbonyle en $C_1$-$C_9$, pouvant être interrompu par 1 ou 2 atomes d'oxygène en fonction éther, un groupement trifluorométhyle, alkylsulfonyle en $C_1$-$C_4$, 3-(alkyle en $C_1$-$C_4$)-1,2,4-oxadiazol-5-yle ou 3-phényl-1,2,4-oxadiazol-5-yle,

$Z^2$ représente un atome d'hydrogène, de chlore, de brome, un groupement cyano, méthyle, méthoxy, éthoxy, phénylazo ou benzoyle, pouvant être substitué par un groupement méthyle, méthoxy ou par un atome de chlore,

$Z^3$ représente un atome d'hydrogène, un groupement cyano, un atome de chlore, de brome ou un groupement alcoxycarbonyle en $C_1$-$C_9$, pouvant être interrompu par 1 ou 2 atomes d'oxygène en fonction éther, ou bien $Z^2$ et $Z^3$ représentent ensemble un reste de formule CO-$NA^1$-CO, où $A^1$ représente un atome d'hydrogène ou un groupement alkyle en $C_1$-$C_4$,

$Z^4$ représente un groupement cyano, formyle, nitro, un groupement alcoxycarbonyle en $C_1$-$C_9$, pouvant être interrompu par 1 ou 2 atomes d'oxygène en fonction éther, un groupement phénylazo éventuellement substitué par un groupement cyano ou un reste de formule

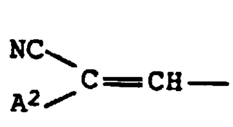

,

où $A^2$ représente un groupement cyano ou un groupement alcoxycarbonyle en $C_1$-$C_9$, pouvant être interrompu par 1 ou 2 atomes d'oxygène en fonction éther,

$Z^5$ représente un atome d'hydrogène, un groupement alkyle en $C_1$-$C_4$, alcoxy en $C_1$-$C_4$, phényle pouvant être substitué par un groupement méthyle, méthoxy ou par un atome de chlore, un groupement benzyle pouvant phényle pouvant être substitué par un groupement méthyle, méthoxy ou par un atome de chlore, un groupement alkylsulfonyle en $C_1$-$C_4$, un atome de chlore, de brome ou un groupement alcoxycarbonyle en $C_1$-$C_9$, pouvant être interrompu par 1 ou 2 atomes d'oxygène en fonction éther,

$Z^6$ représente un groupement alkyle en $C_1$-$C_4$, phényle pouvant être substitué par un groupement méthyle, méthoxy ou par un atome de chlore, un groupement benzyle pouvant être substitué par un groupement méthyle, méthoxy ou par un atome de chlore, un groupement cyano, nitro, un groupement alcoxycarbonyle en $C_1$-$C_9$, pouvant être interrompu par 1 ou 2 atomes d'oxygène en fonction éther ou un groupement alkylsulfonyle en $C_1$-$C_4$,

$Z^7$ représente un groupement alkyle en $C_1$-$C_4$, phényle pouvant être substitué par un groupement méthyle, méthoxy ou par un atome de chlore, un groupement benzyle pouvant phényle pouvant être substitué par un groupement méthyle, méthoxy ou par un atome de chlore, ou un groupement alkylsulfonyle en $C_1$-$C_4$, et

$Z^8$ représente un groupement nitro, cyano ou alkylsulfonyle en $C_1$-$C_4$.

**3.** Mélanges de colorants selon la revendication 1, caractérisés en ce qu'ils contiennent 6 à 12 colorants de formule I de la même couleur.

**4.** Mélanges de colorants selon la revendication 1, caractérisés en ce que D représente un reste de formule IIb, IIc ou IId.

**5.** Utilisation de mélanges de colorants selon la revendication 1, pour la teinture ou l'impression de matériaux textiles.

**6.** Mélanges de colorants, contenant un ou plusieurs colorants azoïques rouges de formule IX

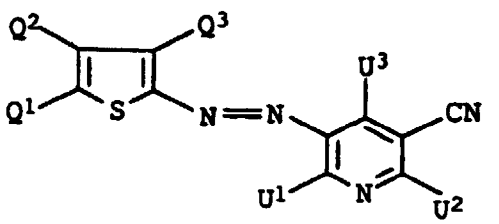

(IX),

dans laquelle

l'un des restes $U^1$ et $U^2$ est mis pour un reste de formule

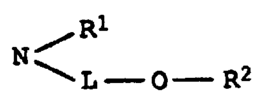

et l'autre est mis pour un reste de formule NH-B où

L représente un groupement alkylène en $C_2$-$C_8$, pouvant être interrompu par 1 ou 2 atomes d'oxygène en fonction éther,

$R^1$ représente un atome d'hydrogène ou un groupement alkyle en $C_1$-$C_4$, pouvant être substitué par des groupements hydroxy, alcoxy en $C_1$-$C_4$ ou alcanoyloxy en $C_1$-$C_8$, et

$R^2$ représente un atome d'hydrogène, un groupement alkyle en $C_1$-$C_4$, benzyle, phényle ou alcanoyle en $C_1$-$C_8$, et

B représente un atome d'hydrogène, un groupement alkyle en $C_1$-$C_4$, pouvant être substitué par un groupement hydroxy, ou un reste de formule L-O-$R^2$, où L et $R^2$ prennent chacun la signification susmentionnée,

$U^3$ représente un atome d'hydrogène ou un groupement alkyle en $C_1$-$C_4$,

$Q^1$ représente un groupement cyano, formyle, nitro, un groupement alcoxycarbonyle en $C_1$-$C_9$, pouvant être interrompu par 1 ou 2 atomes d'oxygène en fonction éther,

$Q^2$ représente un atome d'hydrogène, un groupement alkyle en $C_1$-$C_4$, alcoxy en $C_1$-$C_4$, phényle pouvant être substitué par un groupement méthyle, méthoxy ou par un atome de chlore, un groupement benzyle pouvant être substitué par un groupement méthyle, méthoxy ou par un atome de chlore, un groupement alkylsulfonyle en $C_1$-$C_4$, un atome de chlore, de brome ou un groupement alcoxycarbonyle en $C_1$-$C_9$, pouvant être interrompu par 1 ou 2 atomes d'oxygène en fonction éther,

$Q^3$ représente un groupement cyano, nitro, un groupement alcoxycarbonyle en $C_1$-$C_9$, pouvant être interrompu par 1 ou 2 atomes d'oxygène en fonction éther, ou un groupement alkylsulfonyle en $C_1$-$C_4$,

un ou plusieurs colorants jaunes de formule X et/ou XI

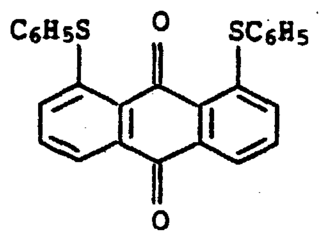

(X),

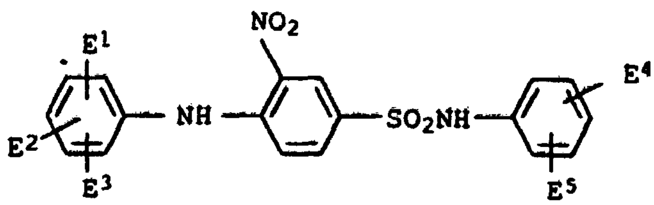

(XI),

dans laquelle

$E^1$, $E^2$, $E^3$, $E^4$ et $E^5$ représentent indépendamment les uns des autres, un atome d'hydrogène, un groupement alkyle en $C_1$-$C_4$, alcoxy en $C_1$-$C_4$, un atome d'halogène ou un groupement phénoxy,

et/ou un ou plusieurs colorants anthraquinoniques bleus de formule XII

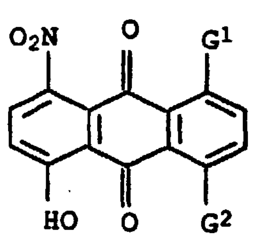

(XII),

dans laquelle
l'un des deux restes $G^1$ et $G^2$ est mis pour un groupement hydroxy et l'autre pour un groupement phénylamino, pouvant être substitué par des groupements hydroxy, alkyle en $C_1$-$C_4$ ou alcoxy en $C_1$-$C_4$,
préparations de colorants contenant ces mélanges de colorants ainsi que leur utilisation pour la teinture ou l'impression de matériaux textiles.

**7.** Mélanges de colorants selon la revendication 6, caractérisés en ce que l'un des restes $U^1$ et $U^2$ représente un groupement amino et l'autre représente un reste de formule

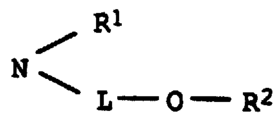

dans laquelle L, $R^1$ et $R^2$ prennent chacun la signification mentionnée dans la revendication 6.

**8.** Mélanges de colorants selon la revendication 6, caractérisés en ce qu'ils contiennent au moins 6 colorants azoïques de formule IX.

**9.** Mélanges de colorants selon la revendication 6, caractérisés en ce qu'ils comportent jusqu'à 30% en poids, par rapport au poids total des colorants IX, X, XI et/ou XII d'un ou plusieurs colorants de nuançage.

**10.** Utilisation des mélanges de colorants selon la revendication 6 pour la teinture ou l'impression de matériaux textiles.